# EUROPEAN PATENT APPLICATION

(11) **EP 2 086 177 A1**
(43) Date of publication of application: **05.08.2009**
(21) Application number: 07829386.7
(22) Date of filing: 09.10.2007
(51) Int. Cl.: H04L 12/28, H04B 7/26

(54) **RADIO COMMUNICATION DEVICE, RADIO COMMUNICATION METHOD, AND RADIO COMMUNICATION PROGRAM**

(30) Priority: 16.11.2006 JP 2006310554
(71) Applicant: NEC Corporation, Minato-ku Tokyo 108-8001 (JP)
(72) Inventor: SUKENARI, Teruki, Minato-ku Tokyo 108-8001 (JP); TAGUCHI, Daigo, Minato-ku Tokyo 108-8001 (JP); NAKAO, Toshiyasu, Minato-ku Tokyo 108-8001 (JP); KONISHI, Yusuke, Minato-ku Tokyo 108-8001 (JP)
(74) Representative: Sieckmann, Dirk Christoph
(86) International application number: PCT/JP2007/069648
(87) International publication number: WO 2008/059678

(57) **Abstract**

It is possible to prevent degradation of power consumption efficiency or lowering of a communication rate in a radio communication. Each node 50 determines a transmission power for data communication so that the number of searched nodes reaches a target value and stores the node address of the searched node by the transmission power in an adjacent node address storage unit 25. Moreover, the transmission power for control communication is determined in the same way. When the node 50 transmits a data frame to another node, an ERTS frame including the node address stored in the adjacent node address storage unit 25 is transmitted by the transmission power for the control communication. After an ECTS frame is received, the data frame is transmitted by the transmission power for the data communication. A control information input/output unit 24 identifies the node in an NAV period from the received ERTS frame or the like and stores the node address of the node in an NAV setting node address storage unit 26.

## Description

### Technical Field

The present invention relates to a radio communication device, a radio communication method, a radio communication program, and a control frame data structure, and more specifically, to a radio communication device, a radio communication method, a radio communication program that can prevent radio interference while suppressing degradation of power consumption efficiency and lowering of communication rate, and to a control frame data structure applied to the radio communication device.

### Background Art

In a radio communication system that executes data transmission with radio, one of the important technical issues is to prevent radio interference. The radio interference causes degradation of radio communication performance such as lowering of communication rate, communication delay, and communication fluctuation.

In the following description, each radio communication device used in the radio communication system is called node.

In the radio communication system as typified by a conventional wireless LAN, the node that performs data transmission executes carrier sense prior to the data transmission in order to prevent the radio interference. The carrier sense means the operation of detecting (sensing) radio (carrier wave) transmitted by another node. When a node does not detect the radio transmitted by another node, the node determines that the data transmission can be performed, and performs data transmission. This series of operation is called CSMA/CA control (Carrier Sense Multiple Access with Collision Avoidance), which makes it possible to prevent the radio interference produced as a plurality of nodes concurrently start the data transmission.

However, it is generally known that the radio interference cannot be completely prevented in the CSMA/CA control. A case in which the radio interference cannot be prevented with the CSMA/CA control includes a hidden terminal problem. For example, assume a case in which there are three nodes from a first node to a third node and the first node and the second node perform data transmission to the third node, as an example. Hereinafter, in this example, the first node and the second node that perform data transmission to the third node are called first transmitting node and second transmitting node, respectively, and the third node is called receiving node. In this example, the first transmitting node and the receiving node are able to perform mutual communication with each other, and the second transmitting node and the receiving node are able to perform mutual communication with each other as well. However, the first transmitting node and the second transmitting node cannot perform carrier sense with each other. The example in which the first transmitting node and the second transmitting node cannot perform carrier sense with each other includes a case in which there is a metallic partition reflecting radio wave between the first transmitting node and the second transmitting node. In this example, the first transmitting node is the hidden terminal to the second transmitting node, and the second transmitting node is the hidden terminal to the first transmitting node. The first transmitting node and the second transmitting node cannot perform carrier sense with each other, so that it is impossible to determine by the carrier sense whether the nodes perform data transmission with each other. If the first transmitting node and the second transmitting node perform data transmission at the same time in this state, the radio interference occurs in the receiving node. This is called radio interference due to the hidden terminal problem, which is produced as the first transmitting node and the second transmitting node are in the hidden terminal state.

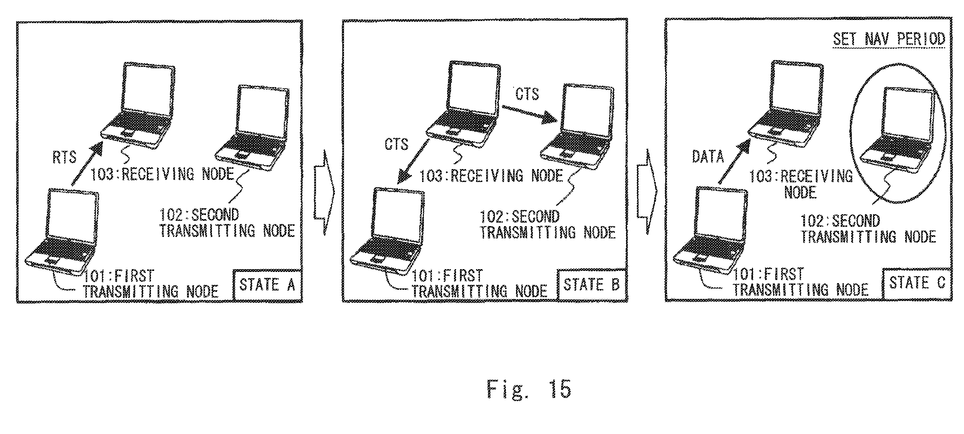

In order to prevent the radio interference due to the hidden terminal, RTS/CTS (Request To Send - Clear To Send) control which is disclosed in a non-patent document 1 is generally employed. Fig. 15 is an explanation diagram showing the RTS/CTS control. Referring to Fig. 15, a case will be described in which three nodes 101 to 103 are provided and the nodes 101 and 102 transmit data to the node 103. Hereinafter, the nodes 101 and 102 are called first transmitting node and second transmitting node, respectively, and the node 103 is called receiving node. In the example shown in Fig. 15, the first transmitting node 101 and the second transmitting node 102 are in the state of hidden terminal that cannot perform the carrier sense with each other.

The RTS/CTS control passes through the state transitions of states A, B, and C. The first transmitting node 101 first broadcasts an RTS frame when transmitting data to the receiving node 101. The state in which the first transmitting node 101 transmits the RTS frame is the state A (see state A in Fig. 15). Note that the frame transmitted from the node is received by all nodes in the radio arrival range of the node in the radio communication. The node receiving the frame refers to the type of the frame that is received, and a destination node address and a transmission source node address, so as to give appropriate processing to the frame that is received. Now, the RTS frame and a CTS frame will be described in detail. Although each of the nodes that transmit the RTS frame and the CTS frame describes the destination node address in the RTS frame and the CTS frame, nodes (nodes that can receive frames) other than the node specified by the destination node address also receive the RTS frame and the CTS frame. In the following description, the transmission of the RTS frame and the CTS frame is called "broadcast transmission" for the sake of convenience.

Upon receiving the RTS frame, each node sets an NAV (Network Allocation Vector) period in which the data transmission is suspended for a certain period of time when the node address of its own does not match any one of the destination node address and the transmission source node address described in the RTS frame. Each node sets the NAV period when the node address of its own does not match the destination node address described in the CTS frame as is similar to a case of receiving the CTS frame. Note that the node in the NAV period stops transmission not only of the data frame but also of the RTS frame and the CTS frame.

In the example shown in Fig. 15, only node that can receive the RTS frame is the receiving node 103. Further, the first transmitting node 101 transmits the RTS frame in which the address of the receiving node 103 is described as the destination node address. Accordingly, the receiving node 103 does not set the NAV period as the address of its own matches the destination node address described in the RTS frame. Accordingly, there is no node that sets the NAV period in the state A.

The receiving node 103 receiving the RTS frame broadcasts the CTS frame. The state of transmitting the CTS frame is the state B (see state B in Fig. 15). The receiving node 103 transmits the CTS frame in which the address of the first transmitting node 101 is described as the destination node address. As a result, the second transmitting node 102 receiving the CTS frame sets the NAV period as the node address of its own and the destination node address described in the CTS frame are different. Further, the first transmitting node 101 receiving the CTS frame starts the data transmission to the receiving node 103 as the node address of its own matches the destination node address described in the CTS frame. This state is the state C (see state C in Fig. 15).

The second transmitting node 102 stops the data transmission while the first transmitting node 101 performs data transmission by the RTS/CTS control. As a result, the radio interference caused by the hidden terminal problem can be prevented. The time width to stop the data transmission set in the NAV period is included in the RTS frame and the CTS frame as a duration, and the node that is not related to transmission and reception of the data (second transmitting node in the example shown in Fig. 15) sets the NAV period by referring to the duration.

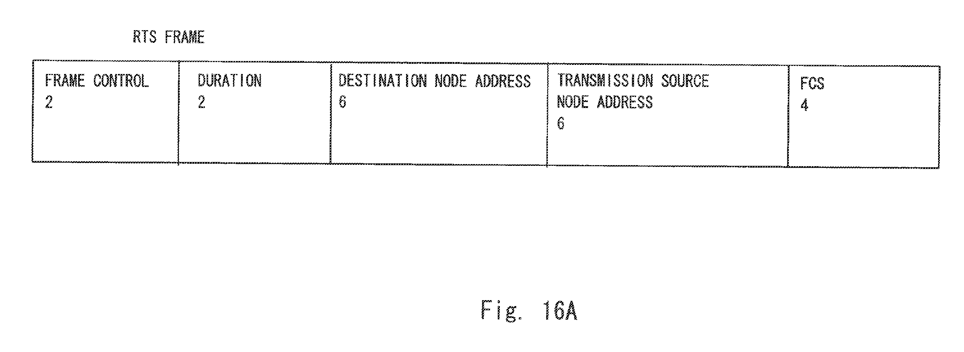

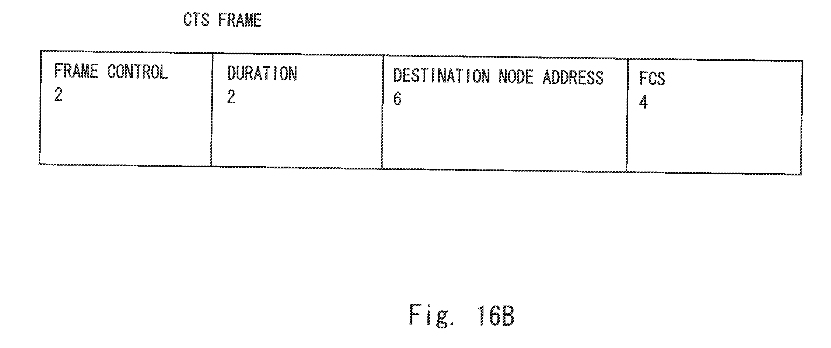

The configuration of the RTS frame and the CTS frame will now be described. The RTS frame and the CTS frame are described in a non-patent document 4. Fig. 16A is an explanation diagram showing the configuration of an existing RTS frame, and Fig. 16B is an explanation diagram showing the configuration of an existing CTS frame. As shown in Fig. 16A, the RTS frame is formed of a frame control field, a duration field, a destination node address field, a transmission source node address field, and an FCS (Frame Check Sequence) field. Further, the CTS frame shown in Fig. 16B is formed of a frame control field, a duration field, a destination node address field, and an FCS field.

The frame control field is a field in which information regarding frame (type of frame, version, and protocol) is described. The duration field is a field in which the duration is described. The duration is the time width of the NAV period (time length to stop data transmission) and may also be referred to as during. More particularly, the length of the NAV period set in the node that is not related to transmission and reception of data is described in the duration field. Upon receiving the RTS frame or the CTS frame, the node that is not related to transmission and reception of data sets the NAV period of its length. The destination node address field is a field in which the node address that will be the destination of the RTS frame or the CTS frame is described. The transmission source node address field is a field in which the node address of the node that will be the transmission source of the RTS frame is described. The MAC address is described, for example, in the destination node address field and the transmission source node address field. The FCS field is a field in which an FCS value is described, and the FCS value is a value used to check whether there is no bit error in the frame by the destination node receiving the frame.

Each of the frame control field and the duration field has two octets, and each of the destination node address field and the transmission source node address field has six octets. Further, the FCS field has four octets. Accordingly, the RTS frame has a frame length of 20 octets, and the CTS frame has a frame length of 14 octets. Note that one octet corresponds to eight bits.

The RTS/CTS control which is one option of IEEE802.11 standard is developed based on the network in which a plurality of nodes perform transmission and reception of data through an access point. A set of the plurality of nodes and the access point is called radio cell. In the radio cell including an access point that collectively controls communication, all nodes are able to receive at least the RTS frame or the CTS frame transmitted by the access point. As such, by using the RTS/CTS control, the period of exclusively transmitting and receiving data between the access point and the nodes can be secured in the radio cell (typically referred to as virtual carrier sense by RTS/CTS control).

On the other hand, there is ad-hoc network where there is no device that collectively manages the communication control of the node such as the access point. In the ad-hoc network, even when the nodes are placed with a distance larger than the radio wave arrival distance, data communication is possible between these nodes by multi-hop communication in which the data is relayed by the node that can perform direct communication. In the ad-hoc network where there is no access point, the nodes are able to perform communication with no access point. As such, another node may execute data transmission to the node in which the NAV period is set by the RTS/CTS control. More specifically, in a case of the ad-hoc network where communication is possible with any node with no access point, the transmitting node that is to transmit the data cannot recognize whether the receiving node that will be the destination sets the NAV period upon receiving the RTS frame or the CTS frame. Thus, the transmitting node may execute data transmission to the receiving node that cannot perform data transmission as the NAV period is set.

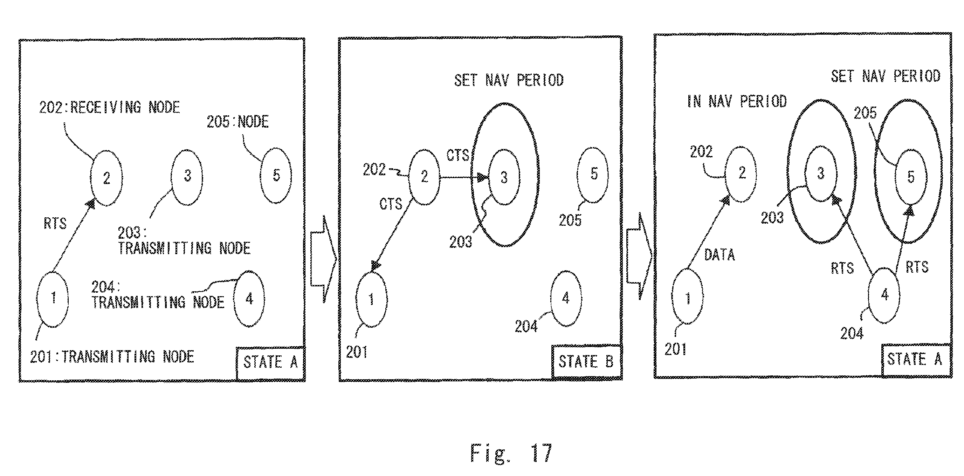

Fig. 17 is an explanation diagram showing the operation of the RTS/CTS control in the ad-hoc network. Hereinafter, the operation of the RTS/CTS control in the ad-hoc network will be described taking the ad-hoc network shown in Fig. 17 as an example. The ad-hoc network shown in Fig. 17 is formed of five nodes 201 to 205 in total. The identification number is given to each of the nodes 201 to 205, and each identification number of the nodes 201 to 205 is "1" to "5". In Fig. 17, the identification numbers are shown in the ellipses indicating each node. It is assumed that each node is able to perform direct communication only with the nodes whose identification numbers are adjacent. In other words, if one node is focused, there are only nodes whose identification numbers are adjacent to that of the node in the radio wave arrival range where the node can perform direct communication. For example, there are only nodes having the identification numbers of "1" and "3" in the radio wave arrival range where the node having the identification number of "2" can perform direct communication. The node having the identification number of "2" can communicate with the nodes having the identification numbers "1" and "3", but cannot communicate with the nodes having the identification numbers "4" and "5". Further, a node that is in the radio wave arrival range of one node (N) and that can directly communicate with the node N is called node that is adjacent to the node N or adjacent node of the node N.

In the following description, a case will be described in which the node 201 starts the data transmission to the node 202, and at the same time, the node 204 transmits the RTS frame to the node 203 to transmit data to the node 203. Hereinafter, the nodes 201 and 204 are referred to as transmitting node, and the nodes 202 and 203 are referred to as receiving node.

When the transmitting node 201 transmits data to the receiving node 202, the transmitting node 201 broadcasts the RTS frame in accordance with the procedure of the RTS/CTS control (state A: see state A in Fig. 17). The receiving node 202 that receives the RTS frame broadcasts the CTS frame in which the node address of the transmitting node 201 is described in the destination address field. In the radio communication system shown in Fig. 17, the nodes 201 and 203 that are adjacent to the receiving node 202 receive the CTS frame. The node 203 sets the NAV period as the node address of its own and the destination node address described in the CTS frame are different (state B: see state B in Fig. 17).

Upon receiving the CTS frame with the destination of itself, the transmitting node 201 starts data transmission to the receiving node 202 (state C). On the other hand, assume a case where the transmitting node 201 starts the data transmission, and at the same time, the transmitting node 204 broadcasts the RTS frame for transmitting data to the receiving node 203. In this case, in the state C, the transmitting node 204 broadcasts the RTS frame in which the node address of the receiving node 203 is described in the destination address field. This RTS frame is received by the receiving node 203 and the node 205 that are adjacent to the transmitting node 204. However, as the receiving node 203 already sets the NAV period in the state B, it cannot transmit the CTS frame. On the other hand, the node 205 that receives the RTS frame with the destination of the node that is different from its own node sets the NAV period. The transmitting node 204 that cannot receive the CTS frame from the receiving node 203 repeats retransmission of the RTS frame (see state C in Fig. 17).
In the ad-hoc network shown in Fig. 17, the transmitting node 204 cannot recognize that the receiving node 203 is in the NAV period. Thus, the transmitting node 204 repeats the retransmission of the RTS frame. This phenomenon is called "NAV blocking". On the other hand, as the transmitting node 204 cannot receive the CTS frame, the data transmission cannot be started. However, the node 205 sets the NAV period for data transmission by the transmitting node 204 at a time of receiving the RTS frame from the transmitting node 204. Accordingly, the node 205 redundantly suppresses the opportunity to transmit the data by itself. This state is called "NAV redundancy setting".

The radio communication system disclosed in a patent document 1 is a radio communication system that prevents radio interference by extending the exchange operation of the RTS/CTS control to the multi-hop communication in the ad-hoc network. The transmitting node broadcasts the RTS frame, and receives the CTS frame from a first relay node. Then, the first relay node broadcasts the CTS frame. Further, a second relay node that receives the CTS frame from the first relay node broadcasts the CTS frame. The relay nodes after the second relay node broadcast the CTS frames every time they receive the CTS frames. The transmitting node measures the number of CTS frames that are received using a counter, and transmission of the data frame is started when receiving the CTS frames of predetermined number or more from the relay node.

In the radio communication system disclosed in the non-patent document 1, a signaling channel used for control communication is additionally provided in the multi-hop communication in the ad-hoc network. The exchange of the RTS frame and the CTS frame is executed on the signaling channel. Further, the receiving node transmits busy tone using the signaling channel while the receiving node receives data from the transmitting node, and the nodes other than the receiving node and the transmitting node receiving the busy tone stop the data communication.

In the radio communication system disclosed in a non-patent document 3, two signaling channels used for control communication are added to the multi-hop communication in the ad-hoc network. This radio communication system is a radio communication system extending the system of a non-patent document 2. A transmitted busy tone notifying that the data transmission is being executed and a received busy tone notifying that the data is being received are used as two signal channels. The receiving node transmits the CTS frame and broadcasts the received busy tone by the signal channel when receiving the RTS frame by the main channel. On the other hand, the transmitting node receiving the CTS frame broadcasts the transmitted busy tone by the signal channel before starting the data transmission. The nodes other than the receiving node and the transmitting node receiving the received busy tone or the transmitted busy tone stop data communication.
[Patent document 1]
   Japanese Unexamined Patent Application Publication No. 2005-130479 (Fig. 10)
[Non-patent document 1]
   V. Bharghavan et al., "MACAW: A Media Access Protocol for Wireless LAN's", Proceedings of ACM SIGCOMM, United States, 1994, pp. 215-225
[Non-patent document 2]
   Suresh Singh et al., "PAMAS-Power Aware Multi-Access Protocol with Signalling for Ad Hoc Networks)", ACM Computer Communications Review, United States, 1998, pp. 5-26
[Non-patent document 3]
   Zygmunt Haas et al., "DualBusy Tone Multiple Access (DBTMA)-A multiple Access Control Scheme for Ad Hoc Networks)", Proceedings of IEEE Wireless Communications and Networking Conference, United States, 2002, Vol. 50, No. 6, pp. 975-985
[Non-patent document 4]
   Masahiro Morikura, Shuji Kubota, "Revised 802.11 High-speed Wireless LAN Textbook, Impress Standard Textbook Series", first edition, Impress Net Business Company, July 21, 2005, p. 72

### Disclosure of Invention

### Technical Problems

In the RTS/CTS control in the radio communication system according to the related art, another node may execute data transmission to the node in which the NAV is set, and the node executing the data transmission consumes extra power for execution of the data transmission.

The reason is that the transmitting node that transmits data tries to execute the data transmission and repeats retransmission of the RTS frame, as the transmitting node that transmits data cannot recognize that the receiving node that will be the data transmission destination is in the NAV period according to the related RTS/CTS control. As such, the phenomenon that the receiving node in which the NAV period is set does not receive data transmission and data retransmission by the transmitting node is called NAV blocking.

Further, in the RTS/CTS control in the related radio communication system, a problem is raised that the communication rate of the node that is adjacent to the "transmitting node that executes data transmission to the receiving node in which the NAV is set" is lowered. For example, in the example shown in the state C in Fig. 17, the communication rate is lowered in the node 205 that is adjacent to the transmitting node 204 that executes data transmission to the receiving node 203 in the NAV period.

An exemplary object is to provide a radio communication device, a radio communication method, a radio communication program that are able to prevent degradation of power consumption efficiency and lowering of the communication rate, and a control frame data structure applied to the radio communication device.

### Technical Solution

A radio communication device according to the present invention is a radio communication device that transmits or receives signals by radio wave, the device including a transmitting means (for example, a radio transmission/reception device 1 or a combination of a first radio transmission/reception device 4 and a second radio transmission/reception device 5) that transmits a data signal including data and a predetermined control signal, in which a radio wave arrival distance in transmitting the data signal is different from a radio wave arrival distance in transmitting the control signal.

A radio communication device according to the present invention is a radio communication device that transmits or receives signals by radio wave, the device including a transmitting means (for example, a radio transmission/reception device 1 or a combination of a first radio transmission/reception device 4 and a second radio transmission/reception device 5) that transmits a data signal including data and a predetermined control signal, a probe signal generating means (for example, a frame assembling unit 14) that generates a probe request signal (for example, a probe request frame) that requests response from another radio communication device and a probe response signal (for example, a probe response frame) that is the response to the probe request signal, a scanning control means (for example, a scanning information input/output unit 22) that indicates generation of the probe response signal to the probe signal generating means in receiving the probe request signal, and an adjusting means (for example, a power control unit 11) that adjusts the radio wave arrival distance in transmitting the data signal and the radio wave arrival distance in transmitting the control signal so that the probe request signal received from another radio communication device satisfies a predetermined condition.

It is preferable that the radio wave arrival distance in transmitting the control signal is larger than the radio wave arrival distance in transmitting the data signal.

Further, the transmitting means may transmit the data signal with radio wave having shorter radio wave arrival distance and transmit the control signal with radio wave having longer radio wave arrival distance of two kinds of radio waves having different radio wave arrival distances due to a fact that at least one of frequency band, power consumption, and diffraction property is different.

The radio communication device may include a probe signal generating means (for example, a frame assembling unit 14) that generates a probe request signal (for example, a probe request frame) that requests response from another radio communication device and a probe response signal (for example, a probe response frame) that is the response to the probe request signal, a scanning control means (for example, a scanning information input/output unit 22) that indicates generation of the probe request signal to the probe signal generating means when receiving the probe request signal, and an adjusting means (for example, a power control unit 11) that adjusts the radio wave arrival distance in transmitting the data signal and the radio wave arrival distance in transmitting the control signal so that the probe request signal received from another radio communication device satisfies a predetermined condition.

The radio communication device may have the configuration in which the probe signal generating means generates the probe request signal and the probe response signal that include an address of the radio communication device itself including the probe signal generating means as a transmission source address, the adjusting means determines transmission power of the probe request signal when the number of probe response signals received from another radio communication device that responds to the probe request signal reaches a predetermined target value as transmission power in transmitting the data signal, the radio communication device includes an adjacent device address storing means (for example, an adjacent node address storage unit 25) that stores a transmission source address of each probe response signal when the number of probe response signals received from another radio communication device that responds to the probe request signal reaches a predetermined target value, the scanning control means stores the transmission source address of each probe response signal when the number of probe response signals received from another radio communication device that responds to the probe request signal reaches a predetermined target value in the adjacent device address storing means, and the adjusting means determines the transmission power of the probe request signal as the transmission power in transmitting the control signal after transmission of the probe request signal so that radio communication device can receive the probe request signal from at least each of other radio communication devices whose address is stored in the adjacent device address storing means.

The radio communication device may include a probe signal generating means (for example, a frame assembling unit 14 of a first radio transmission/reception device 4) that generates a probe request signal (for example, a probe request frame) that requests response from another radio communication device and a probe response signal (for example, a probe response frame) that is the response to the probe request signal, a scanning control means (for example, a scanning information input/output unit 22) that indicates generation of the probe request signal to the probe signal generating means when receiving the probe request signal, and an adjusting means (for example, a power control unit 11) that adjusts the radio wave arrival distance in transmitting the data signal so that the probe request signal received from another radio communication device satisfies a predetermined condition.

The radio communication device may have the configuration in which the probe signal generating means generates the probe request signal and the probe response signal that include an address of the radio communication device itself including the probe signal generating means as a transmission source address, the adjusting means determines transmission power of the probe request signal when the number of probe response signals received from another radio communication device that responds to the probe request signal reaches a predetermined target value as transmission power in transmitting the data signal, the radio communication device includes an adjacent device address storing means (for example, an adjacent node address storage unit 25) that stores a transmission source address of each probe response signal when the number of probe response signals received from another radio communication device that responds to the probe request signal reaches a predetermined target value, and the scanning control means stores the transmission source address of each probe response signal when the number of probe response signals received from another radio communication device that responds to the probe request signal reaches a predetermined target value in the adjacent device address storing means.

The radio communication device may include an address notification signal transmitting means (for example, a radio transmission/reception device 1) that transmits an address notification signal including an address stored in the adjacent device address storing means, in which the adjusting means determines the transmission power of the probe request signal as the transmission power in transmitting the control signal after transmission of the probe request signal so that radio communication device can receive the probe request signal from at least each of other radio communication devices whose address is stored in the adjacent device address storing means.

The transmitting means may transmit a first control frame (for example, an ERTS frame) including the address stored in the adjacent device address storing means by the transmission power in transmitting the control signal as a first control signal before transmitting the data signal, and transmit a second control frame (for example, an ECTS frame) including the address stored in the adjacent device address storing means by the transmission power in transmitting the control signal when receiving the first control frame from another radio communication device.

The transmitting means may transmit frames as the first control frame and the second control frame, the frames including a frame control field in which at least a type of the frame is described, a duration field in which duration is described, a destination node address field in which an address of the radio communication device that is a destination of the first control frame is described, a transmission source node address field in which an address of the radio communication device that is a transmission source of the first control frame is described, an adjacent node number field in which the number of addresses stored in the adjacent device address storing means is described, an adjacent node address field in which each address stored in the adjacent device address storing means is stored, and an FCS (Frame Check Sequence) field in which an FCS value is described.

The transmitting means may stop transmission of the frames when the address described in the destination node address field of the first control frame does not match the address of the radio communication device itself receiving the first control frame and the adjacent device address storing means stores the address described in the destination node address field of the first control frame or the address described in the transmission source node address field in receiving the first control frame.

The transmitting means may transmit the second control frame in which the address described in the transmission source node address field of the first control frame is described in the destination node address field when the address described in the destination node address field of the first control frame matches the address of the radio communication device itself receiving the first control frame when receiving the first control frame.

The radio communication device may include a transmission stop device address storing means (for example, an NAV setting node address storage unit 26) that stores an address of another radio communication device that stops transmission of frames and a period of stopping the transmission of the frames while being made correspondent to each other.

The radio communication device may include a transmission stop device address managing means (for example, a control information input/output unit 24) that stores a common address and a duration described in the duration field of the first control frame in the transmission stop device address storing means while being made correspondent to each other when the address described in the destination node address field of the first control frame does not match the address of the radio communication device itself that receives the first control frame, the adjacent device address storing means does not store the address described in the destination node address field of the first control frame and the address described in the transmission source node address field, and there is a common address of the address described in the adjacent node address field of the first control frame and the address stored in the adjacent device address storing means when receiving the first control frame.

The transmission stop device address managing means may stop transmission of the first control frame having an address corresponding to a stop period as destination when the transmission of the frame stored in the transmission stop device address storing means is stopped.

The radio communication device may include a data processing means (for example, a data processing device 3) that outputs data that should be transmitted, and a data input/output means (for example, a data input/output unit 23) that outputs the data output from the data processing means to the transmitting means.

Further, in a radio communication method according to the present invention, a transmitting means (for example, a radio transmission/reception device 1) transmits a data signal by radio wave in transmitting the data signal in transmitting the data signal including data, and transmits a control signal by radio wave in transmitting the control signal having a radio wave arrival distance larger than a radio wave arrival distance of radio wave in transmitting the data signal in transmitting a predetermined control signal.

Further, a radio communication program according to the present invention is a radio communication program mounted on a computer, the computer including an adjacent device address storing means (for example, an adjacent node address storage unit 25) that stores an address of a radio communication device capable of directly transmitting a data signal including data, a transmission stop device address storing means(for example, an NAV setting node address storage unit 26) that stores an address of the radio communication device that stops transmission of a signal and a signal transmission stop period while being made correspondent to each other, and a transmitting means (for example, a radio transmission/reception device 1, or a combination of a first radio transmission/reception device 4 and a second radio transmission/reception device 5) that transmits the data signal and a predetermined control signal, in which the radio communication program forces the computer to execute transmission stop device storing processing to store a common address and a stop period shown by a radio signal in the transmission stop device address storing means while being made correspondent to each other when the address of the computer does not match a transmission source address of the received control signal, the adjacent device address storing means does not store the transmission source address and a destination node address of the control signal, and there is a common address of the address stored in the adjacent device address storing means of the radio communication device transmitting the control signal included in the control signal and the address stored in the adjacent device address storing means when receiving a predetermined control signal.

Further, a control frame data structure according to the present invention is a control frame data structure which is a data structure of a control frame (for example, an ERTS frame, an ECTS frame) transmitted prior to transmission of a data frame in which data is described, the control frame data structure including a frame control field in which at least a type of the frame is described, a duration field in which duration is described, a destination node address field in which an address of a radio communication device that is a destination of the control frame is described, a transmission source node address field in which an address of the radio communication device which is a transmission source of the control frame is described, and an adjacent node number field in which the number of other radio communication devices in which direct transmission is available by the radio communication device which is the transmission source of the control frame, an adjacent node address field in which an address of each of other radio communication devices in which direct transmission is available by the radio communication device that is the transmission source of the control frame is described, and an FCS (Frame Check Sequence) field in which an FCS value is described.

### Advantageous Effects

According to the present invention, by the transmission stop device address storing means that stores the address of another radio communication device that stops transmission of the frame and the stop period of the transmission of the frame while being correspondent to each other, another radio communication device that stops the frame transmission can be specified. As a result, it is possible to stop repeated transmission to the radio communication device. Accordingly, the degradation of power consumption efficiency of the radio communication device can be prevented. Consequently, the operating time of the radio communication device can be made longer.

Furthermore, as it is possible to specify whether the frame transmission is stopped by the radio communication device that will be the destination, the transmission of the control frame that should be transmitted prior to the data transmission can be stopped. As a result, the radio communication devices other than the radio communication device that will be the destination can be prevented from being made to the state in which the transmission is stopped. Consequently, it is possible to prevent the opportunity of transmission of the radio communication device from being reduced, whereby the communication can be made valid.

### Brief Description of Drawings

Fig. 1A is an explanation diagram showing an example of an ERTS frame having a control frame data structure according to the present invention;
Fig. 1B is an explanation diagram showing an example of an ECTS frame having a control frame data structure according to the present invention;
Fig. 2 is a block diagram showing a configuration example of a radio communication device according to the present invention;
Fig. 3 is a flow chart showing an example of a process flow of nodes according to a first exemplary embodiment;
Fig. 4 is a flow chart showing an example of a process flow of nodes according to the first exemplary embodiment;
Fig. 5A is an explanation diagram showing an example of a radio communication system including a plurality of nodes according to the first exemplary embodiment;
Fig. 5B is an explanation diagram showing an example of a radio communication system including a plurality of nodes according to the first exemplary embodiment;
Fig. 6 is a block diagram showing a configuration example of a radio communication device according to a second exemplary embodiment;
Fig. 7 is a flow chart showing an example of a process flow of nodes according to the second exemplary embodiment;
Fig. 8 is a flow chart showing an example of a process flow of nodes according to the second exemplary embodiment;
Fig. 9A is an explanation diagram showing an example of a radio communication system including a plurality of nodes according to the second exemplary embodiment;
Fig. 9B is an explanation diagram showing an example of a radio communication system including a plurality of nodes according to the second exemplary embodiment;
Fig. 10A is an explanation diagram showing a node address stored in an adjacent node address storage unit of each node in a first exemplary example;
Fig. 10B is an explanation diagram showing a node address stored in an adjacent node address storage unit of each node in the first exemplary example;
Fig. 11 is an explanation diagram showing a state of each node after a transmitting node (4) broadcasts the ERTS frame by transmission power [C] in the first exemplary example;
Fig. 12 is an explanation diagram showing a state of each node after a receiving node (3) broadcasts the ECTS frame by transmission power [C] in the first exemplary example;
Fig. 13A is an explanation diagram showing an example of the radio communication system in which nodes in which direct communication is available by the transmission power [D] is equal to nodes in which direct communication is available by the transmission power [C];
Fig. 13B is an explanation diagram showing an example of the radio communication system in which nodes in which direct communication is available by the transmission power [D] is equal to nodes in which direct communication is available by the transmission power [C];
Fig. 14 is an explanation diagram showing the difference of radio propagation characteristics between a wireless LAN device and a specified low power radio device;
Fig. 15 is an explanation diagram showing RTS/CTS control;
Fig. 16A is an explanation diagram showing a configuration of an RTS frame;
Fig. 16B is an explanation diagram showing a configuration of a CTS frame; and
Fig. 17 is an explanation diagram showing the operation of the RTS/CTS control in an ad-hoc network.

### Explanation of Reference

- 1: radio transmission/reception device
- 2: node control device
- 3: data processing device
- 7: antenna
- 11: power control unit
- 12: modulation unit
- 13: demodulation unit
- 14: frame assembling unit
- 15: frame disassembling unit
- 21: analysis unit
- 22: scanning information input/output unit
- 23: data input/output unit
- 24: control information input/output unit
- 25: adjacent node address storage unit
- 26: NAV setting node address storage unit

### Best Modes for Carrying Out the Invention

The specific exemplary embodiments according to the present invention will now be described with reference to the drawings.

### First exemplary embodiment

When radio communication devices according to the present invention perform data transmission and reception, a radio communication device of transmission source node transmits a control frame corresponding to an RTS frame (hereinafter referred to as ERTS frame) setting a node address of a radio communication device to which the data is transmitted as a destination. The radio communication device that has received the ERTS frame transmits a control frame corresponding to a CTS frame (hereinafter referred to as ECTS frame) setting the radio communication device that has transmitted the ERTS frame as a destination. The ERTS (Enhanced-RTS) frame and the ECTS (Enhanced-CTS) frame have the control frame data structure according to the present invention, and are different from an RTS frame and a CTS frame according to a related art.

The radio communication device according to the present invention functions as a node that transmits and receives data in a radio communication system in which a plurality of radio communication devices perform communication. The node that will be described below is equal to the radio communication device.

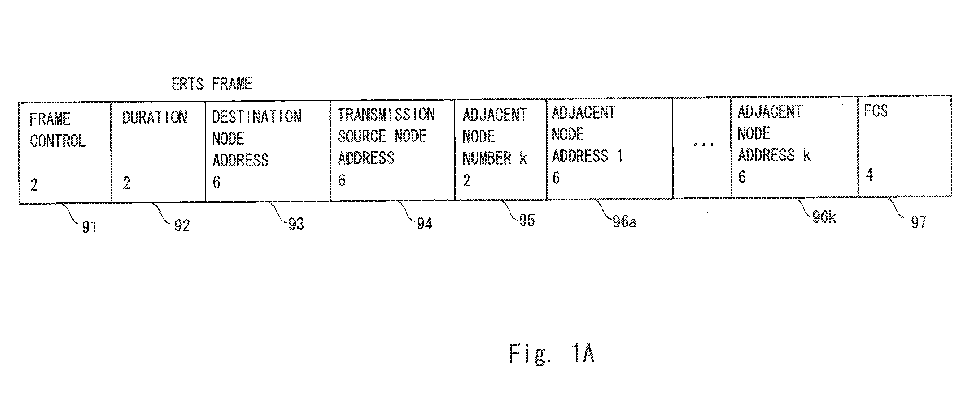

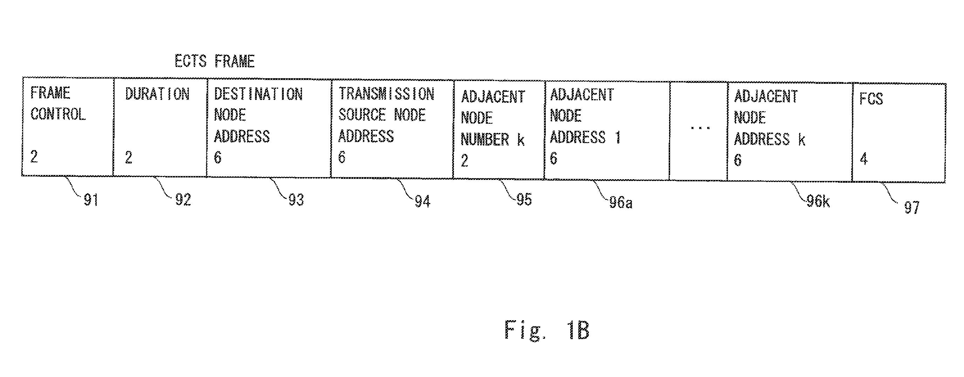

Figs. 1A and 1B are explanation diagrams showing examples of the ERTS frame and the ECTS frame having a control frame data structure according to the present invention. Fig. 1A shows the example of the ERTS frame, and Fig. 1B shows the example of the ECTS frame. The control frame data structure according to the present invention includes a frame control field 91, a duration field 92, a destination node address field 93, a transmission source node address field 94, an adjacent node number field 95, adjacent node address fields 96a to 96k, and an FCS (Frame Check Sequence) field 97.

The number shown in each field in Figs. 1A and 1B shows the length of each field. Each of the frame control field 91 and the duration field 92 has two octets, and each of the destination node address field 93 and the transmission source node address field 94 has six octets. Further, the FCS field 97 has four octets.

In the frame control field 91, information regarding the frame (type of frame, version, and protocol) is described. In the frame control field 91 of the ERTS frame, information is described indicating that the type of the frame is ERTS frame. Further, information indicating that the type of the frame is ECTS frame is described in the frame control field 91 of the ECTS frame.

Note that the data frame storing data includes a frame control field as well, and information indicating that the type of the frame is the data frame is described in the frame control field of the data frame.

The duration field 92 is a field in which the time width of the NAV period (in other words, time length during which the data transmission is stopped) is described. The time width of the NAV period is called duration.

In the destination node address field 93, the node address that will be the destination of the ERTS frame or the ECTS frame is described. In the transmission source node address field 94, the node address of the node that will be the transmission source of the ERTS frame or the ECTS frame is described. In the destination node address field 93 and the transmission source node address field 94, a MAC address is described, for example, as the node address of the node that will be the destination or transmission source of the frame. Hereinafter, it is assumed that the MAC address is described in the destination node address field 93 and the transmission source node address field 94.

In the FCS field 97, an FCS value is described.

In the adjacent node number field 95, the number of nodes that are adjacent to the node transmitting the ERTS frame or the ECTS frame is described. Note that, "adjacent" according to the present invention means that the data transmission or reception can be directly executed. In the description of the present invention, a node that is able to directly receive the frame transmitted by a node (N) by transmission power for data transmission is referred to as node that is adjacent to the node N, or adjacent node of the node N. In the examples shown in Figs. 1A and 1B, the field length of the adjacent node number field 95 has two octets.

In the adjacent node address fields 96a to 96k, the node address of the node that is adjacent to the node transmitting the ERTS frame or the ECTS frame is described. In the adjacent node address fields 96a to 96k, the address of the adjacent node of the node transmitting the ERTS frame or the ECTS frame is described. The address of the adjacent node is identification information such as a MAC address that is uniquely given to the adjacent node. In the following description, it is assumed that the MAC address of the adjacent node is described in the adjacent node address field. In the examples shown in Figs. 1A and 1B, a case is shown in which each field length of the adjacent node address fields 96a to 96k has six octets.

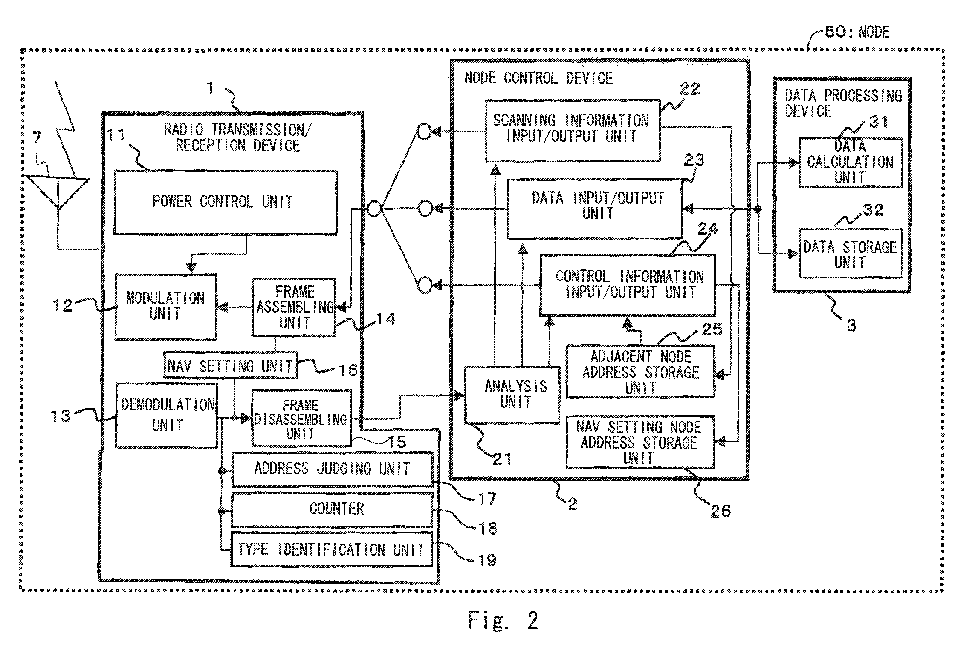

When the adjacent node number field 95 has two octets, the node address of the adjacent node of up to k=65535 (=216-1) can be described in the ERTS frame or the ECTS frame. However, when the size of the ERTS frame and the ECTS frame that are frequently exchanged in the control communication is dramatically enlarged, communication overhead occurs. Further, as will be described later, each node determines the transmission power for data transmission in a way that the number of adjacent nodes reaches the target value. In this case, if it is assumed that the target value of the number of adjacent nodes of each node is different from each other and each node creates the ERTS frame and the ECTS frame in accordance with the number of adjacent nodes of its own, the frame lengths of the ERTS frame and the ECTS frame are different depending on from which node it is transmitted. As such, the load of the frame assembling unit 14 and the frame disassembling unit 15 (see Fig. 2) becomes high when the frame lengths of the ERTS frame and the ECTS frame are different depending on from which node it is transmitted. The frame assembling unit 14 and the frame disassembling unit 15 will be described later with reference to Fig. 2. From the above description, it is preferable to make the ERTS frame and the ECTS frame have the fixed length. A case will now be described in which the ERTS frame and the ECTS frame have the fixed length and the maximum value of the adj acent node address that can be described in the adjacent node field is predetermined.

However, the maximum number of adjacent nodes that can be specified by the ERTS frame, the ECTS frame, and the adjacent node number field length are determined based on the number of nodes that operate in the radio communication system to be operated, and the density of installation of the nodes. The maximum number of adj acent nodes that can be specified may be set in a non-volatile storage device such as an internal register provided in the radio transmission/reception device 1 (see Fig. 2) as is similar to the method of setting the RTS threshold provided in the related wireless LAN (index of the frame length to determine whether the RTS/CTS control should be performed). The radio transmission/reception device 1 will be described later with reference to Fig. 2.

Next, the configuration of the node (radio communication device) according to the present invention will be described.

Fig. 2 is a block diagram showing the configuration example of the node (radio communication device) according to the present invention. In the first exemplary embodiment, a node 50 includes a radio transmission/reception device 1, a node control device 2, and a data processing device 3.

The radio transmission/reception device 1 includes a power control unit 11, a modulation unit 12, a demodulation unit 13, a frame assembling unit 14, a frame disassembling unit 15, an NAV setting unit 16, an address judging unit 17, a counter 18, a type identification unit 19, and an antenna 7.

The frame assembling unit 14 generates a probe request frame and a probe response frame, a data frame, and a control frame (ERTS frame and ECTS frame) using various data input from the node control device 2 (scanning information for scanning, data for data communication, and control information for control communication).

The frame assembling unit 14 generates the probe request frame and the probe response frame using the scanning information input from a scanning information input/output unit 22 of the node control device 2. The scanning means to search nodes in which communication is available. The probe request frame is a frame to request the response from the node that receives the probe request frame (another node), and the probe response frame is a frame that is transmitted from the node that has received the probe request frame as the response to the probe request frame. The scanning information means data group that forms the probe request frame and the probe response frame. More specifically, the scanning information includes data such as beacon period, a list of radio transmission rate that is supported, and service set identifier described in the probe request frame and the probe response frame. The frame assembling unit 14 generates the probe request frame by describing the data included in the scanning information in a predetermined field. The frame assembling unit 14 also generates the probe response frame in the same way. When generating the probe request frame and the probe response frame, the frame assembling unit 14 describes the address of its own node in the transmission source address field of the probe response frame and the probe request frame.

Further, the frame assembling unit 14 generates the data frame storing the data input from the data input/output unit 23 of the node control device 2.

Furthermore, the frame assembling unit 14 generates the ERTS frame by describing the control information input from the control information input/output unit 24 of the node control device 2 in the predetermined field of the ERTS frame (each field 91 to 97; see Fig. 1). In the same way, the frame assembling unit 14 generates the ECTS frame by describing the control information input from the control information input/output unit 24 in the predetermined field of the ECTS frame. The control information input from the control information input/output unit 24 includes the duration, the destination node address, the transmission source node address, the number of adjacent nodes, and the adjacent node address.

The modulation unit 12 modulates the frame generated by the frame assembling unit 14, and transmits the modulated frame from the antenna 7. The modulation unit 12 transmits the frame through radio wave.

The power control unit 11 controls the power when the modulation unit 12 transmits the frame from the antenna 7. More specifically, the transmission power is determined so that the number of nodes searched as a node in which communication is available by scanning reaches the target value, and the transmission power is stored. The power control unit 11 then specifies the stored transmission power as the transmission power when the modulation unit 12 transmits the frame. However, the power control unit 11 determines and stores the transmission power for data communication so that the number of nodes searched as a node in which data communication is available reaches the target value. Further, the power control unit 11 determines and stores the transmission power for control communication so that the number of nodes searched as a node in which control communication is available (nodes that can transmit and receive the ERTS frame and the ECTS frame) reaches the target value. In summary, the power control unit 11 separately determines the transmission power for data communication and the transmission power for control communication, and specifies different transmission powers depending on whether the frame is the data frame, or the ERTS frame or the ECTS frame. The modulation unit 12 transmits the modulated frame by the specified transmission power.

Hereinafter, the transmission power for data communication is described as transmission power [D]. Further, the transmission power for control communication (more specifically, for transmission of the ERTS frame and the ECTS frame) is described as transmission power [C]. The power control unit 11 determines the transmission power [D] and the transmission power [C] by separately adjusting them.

The demodulation unit 13 demodulates a radio signal (frame) received by the antenna 7.

The frame disassembling unit 15 disassembles the frame demodulated by the demodulation unit 13 into a bit string for each field. The frame disassembling unit 15 outputs the bit string for each field obtained by disassembling the frame to the node control device 2.

The address judging unit 17 judges whether the destination address described in the ERTS frame or the ECTS frame that is received matches the address of its own node, and outputs the judging result to the NAV setting unit 16 and the control information input/output unit 24.

When it is judged that the destination address described in the received ERTS frame does not match the address of its own node and there is a common address with the adjacent node address stored in the adjacent node address storage unit 25 in the adjacent node address that is described in the ERTS frame, the NAV setting unit 16 sets the NAV period. More specifically, the setting of the NAV period means to make the frame assembling unit 14 stop the frame generating operation and to disable the frame transmission during the NAV setting period (duration) described in the ERTS frame. The NAV setting unit 16 checks a timer (not shown) included in the radio transmission/reception device 1, and terminates the setting of the NAV period when the NAV period has been passed. In summary, the NAV setting unit 16 allows the frame assembling unit 14 to generate the frame, and the frame can be transmitted. Note that the setting of the NAV period may be simply referred to as NAV setting.

The type identification unit 19 identifies the type of the frame that is received with reference to the frame control field 91 of the received frame. For example, the type identification unit 19 identifies whether the received frame is the data frame, or the ERTS frame or the ECTS frame.

The counter 18 counts the number of probe response frames that are received after transmitting the probe request frame. In summary, the counter 18 counts the number of nodes that have responded to the probe request frame. The power control unit 11 compares the value counted by the counter 18 with the target value (target value of the number of nodes), and adjusts the transmission power.

Furthermore, although not shown in the drawings, the radio transmission/reception device 1 includes a carrier sense execution unit that executes the carrier sense to determine whether or not another node executes communication before the demodulation unit 13.

The node control device 2 includes a scanning information input/output unit 22, a data input/output unit 23, a control information input/output unit 24, an adjacent node address storage unit 25, an NAV setting node address storage unit 26, and an analysis unit 21.

The adjacent node address means the address (identification number that is uniquely given to the node such as MAC address, for example) of the node (adjacent node) in which direct communication is available by data transmission. Further, the NAV setting node address means the address of the node in the NAV setting. It is assumed here that each of the adjacent node address and the NAV setting node address is the MAC address.

The adjacent node address storage unit 25 is a storage device that stores the number of adjacent nodes and the node address of the adjacent node that is adjacent to the own node. Note that the adjacent node address storage unit 25 may not store the number of adjacent nodes.

The NAV setting node address storage unit 26 is a storage device that stores the NAV setting node address and the NAV period.

The scanning information input/output unit 23 makes the frame assembling unit 14 generate the probe response frame and the probe request frame that are used in executing scanning when the scanning is executed. The scanning information input/output unit 23 outputs the scanning information to the frame assembling unit 14 and makes the frame assembling unit 14 generate the probe request frame and the probe response frame. The probe request frame and the probe response frame that are generated are modulated in the modulation unit 12, and then transmitted. The transmission powers that are used in executing the data communication and the control communication that are determined after executing the scanning are stored in the power control unit 11.

One aspect of the timing at which the scanning is executed includes periodically performing scanning. In the description below, a case in which the node 50 periodically performs scanning will be described. In this case, the scanning information input from the scanning information input/output unit 22 includes the interval (time) from when a scanning is executed to when the next scanning is executed. The frame assembling unit 14 may create the probe request frame every time the time specified by the scanning information has been passed. Otherwise, the scanning information input/output unit 23 may output the scanning information to the frame assembling unit 14 at regular time intervals to make the frame assembling unit 14 generate the probe request frame.

The scanning information input/output unit 22 is as a node in which direct communication is available by scanning. The control information input/output unit 24 refers to the adjacent node address storage unit 25, obtains the address of the adjacent node that is needed to generate the control frame, outputs the address to the frame assembling unit 14, and makes the frame assembling unit 24 generate the control frame used for control communication when executing the control communication. The control communication here means the transmission and reception of the ERTS frame and the ECTS frame performed prior to the data transmission, and the above control frame is the ERTS frame or the ECTS frame. Further, the control information input/output unit 24 outputs the destination node address, the transmission source node address, and the number of adjacent nodes to the frame assembling unit 24 as the control information that should be described in the control frame. The control frame that is generated is modulated by the modulation unit 12, and is transmitted using the transmission power specified in the power control unit 11.

Further, when the predetermined condition is satisfied when receiving the control frame, the control information input/output unit 24 stores the node address of the node in which the NAV period is being set (NAV setting node address) and the NAV period in the NAV setting node address storage unit 26 while being made correspondent with each other.

When receiving the ERTS frame, the control information input/output unit 24 stores the NAV setting node address and the NAV period in the NAV setting node address storage unit 26 while being made correspondent with each other when the condition is satisfied that the destination node address of the received ERTS frame does not match the node address of its own node, the destination node address or the transmission source node address of the ERTS frame is not stored in the adj acent node address storage unit 25, and the adjacent node address described in the ERTS frame is stored in the adjacent node address storage unit 25.

When receiving the ECTS frame, the control information input/output unit 24 stores the NAV setting node address and the NAV period in the NAV setting node address storage unit 26 while being made correspondent with each other when the condition is satisfied that the destination node address of the received ECTS frame does not match the node address of its own node, the destination node address or the transmission source node address of the ECTS frame is not stored in the adjacent node address storage unit 25, and the adjacent node address described in the ECTS frame is stored in the adjacent node address storage unit 25.

The control information input/output unit 24 may be supplied with the judging result of whether the destination address described in the received frame matches the address of its own node from the address judging unit 17.

Then, the control information input/output unit 24 constantly monitors the NAV setting node address storage unit 26, and delays the control communication of the node address stored in the NAV setting node address storage unit 26. When the control information input/output unit 24 determines that the NAV setting period stored in the NAV setting node address storage unit 26 has been terminated referring to a timer (not shown) included in the node control device 2, it deletes the NAV setting period and the node address corresponding to the NAV setting period from the NAV setting node address storage unit 26.

When performing the data communication, the data input/output unit 23 outputs the data input from the data processing device 3 to the frame assembling unit 14, and makes the frame assembling unit 24 generate the data frame used for data communication. The data frame that is generated is modulated in the modulation unit 12, and is transmitted using the transmission power specified in the power control unit 11.

Further, when the data included in the received data frame is input from the analysis unit 21, the data input/output unit 23 outputs the data to a data calculation unit 31 of the data processing device 3.

The bit string that is obtained by disassembling the frame for each field by the frame disassembling unit 15 is input to the analysis unit 21. The analysis unit 21 classifies the input bit string into scanning information, data, and control information. The analysis unit 21 outputs the scanning information to the scanning information input/output unit 22, outputs the data to the data input/output unit 23, and outputs the control information to the control information input/output unit 24.

The data processing device 3 calculates and stores data, and outputs data that should be transmitted to another node to the node control device 2. The data processing device 3 includes a data calculation unit 31 and a data storage unit 32.

The data storage unit 32 is a storage device that stores data.

The data calculation unit 31 executes the calculation processing on the data input from the data input/output unit 23 (received data), and makes the data storage unit 32 store the data that is subjected to calculation processing. The data input from the data input/output unit 23 may be directly stored in the data storage unit 32.

When transmitting the data stored in the data storage unit 32, the data calculation unit 31 reads the data from the data storage unit 32, and outputs the data to the data input/output unit 23. Further, the data calculation unit 31 may be supplied with the data to be transmitted from an external device, and output the data to the data input/output unit 23. The data calculation unit 31 may execute the calculation processing on the data supplied from the external device, and output the resulting data to the data input/output unit 23 as the data to be transmitted.

The content of the calculation processing executed by the data calculation unit 31 is not specifically limited.

Next, the operation will be described.

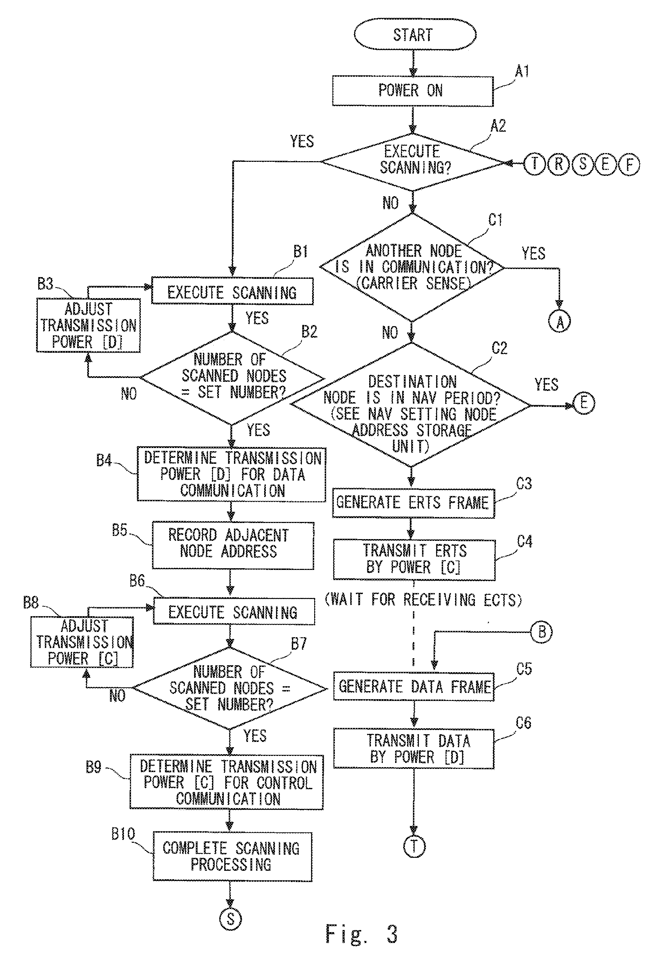

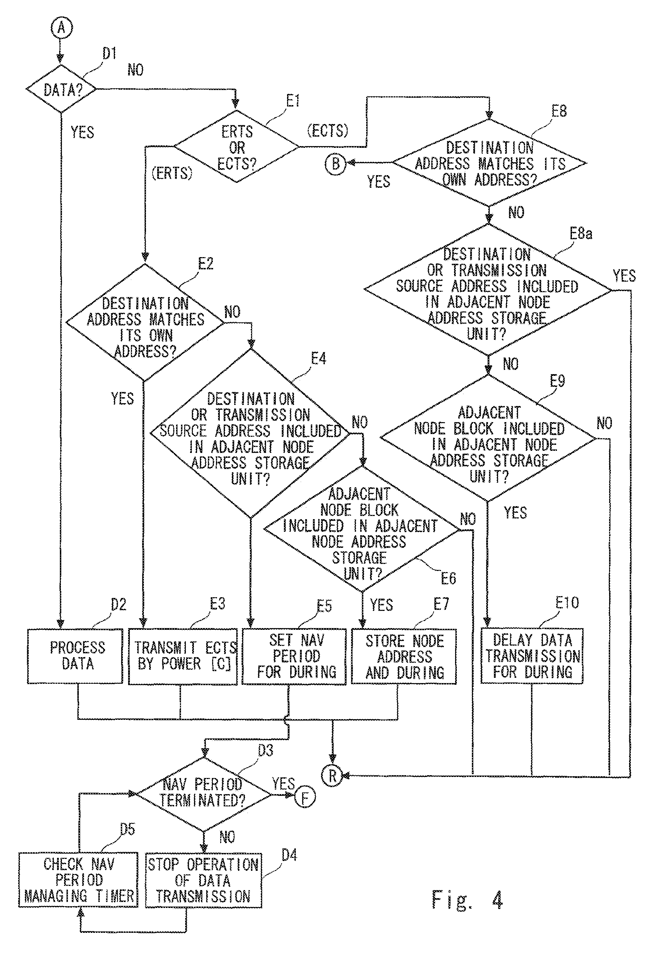

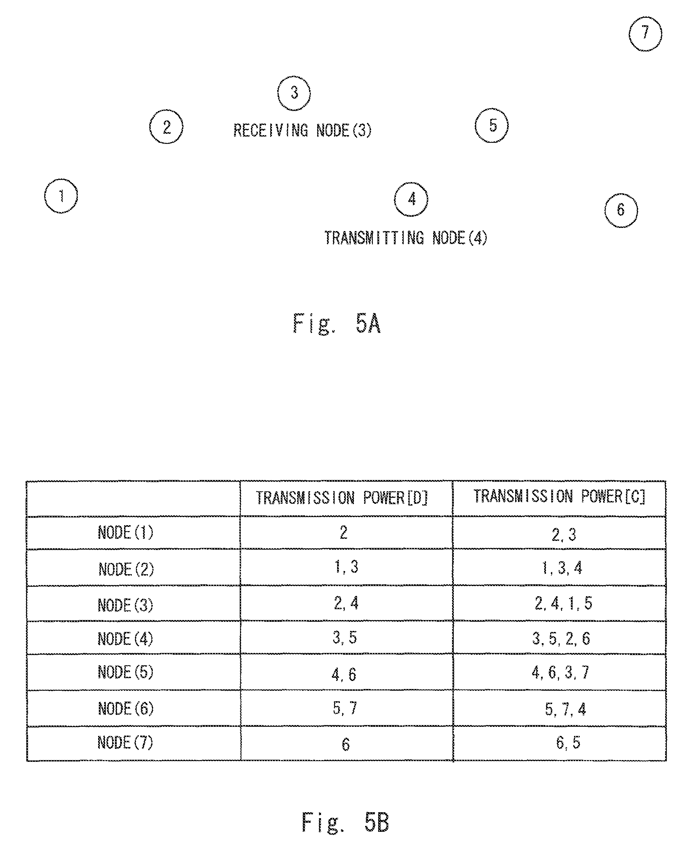

Figs. 3 and 4 are flow charts showing the example of a process flow of nodes (radio communication devices) according to the first exemplary embodiment. Figs. 5A and 5B are explanation diagrams showing the example of the radio communication system including a plurality of nodes according to the first exemplary embodiment. In Figs. 5A and 5B, the radio communication system including seven nodes are shown as an example. Now, the operation of the node will be described taking the radio communication system shown in Figs. 5A and 5B as an example. The configuration of each node shown in Figs. 5A and 5B corresponds to the configuration of each node shown in Fig. 2.

All the nodes installed in the radio communication system are powered on (step A1). After they are powered on, each node determines whether the scanning is to be executed (step A2). In this example, explanation will be made on a case in which each node executes scanning at regular time intervals. For example, the scanning information input/output unit 22 outputs the scanning information to the frame assembling unit 14 by including the information of the intervals (time) from when the scanning is executed to when the next scanning is executed in the scanning information, and the frame assembling unit 14 may create the probe request frame to determine that the scanning is started every time the time has been passed. Further, the scanning information input/output unit 23 may determine that the scanning is executed at regular time intervals, output the scanning information to the frame assembling unit 14, and make the frame assembling unit 14 create the probe request frame.

There are two purposes to carry out the scanning. The first one is to determine the transmission power [D] specified in the data communication and the transmission power [C] specified in the control communication. The second one is to specify the adjacent node in which direct communication is available by at least the transmission power [D], and to further specify the node in which direct communication is available by the transmission power [C].

When it is determined that the scanning is executed in step A2 (YES in step A2), the node that executes scanning executes the scanning by the transmission power [D] that is previously set (step B1). In step B1, the frame assembling unit 14 of the node in which the scanning is determined to be executed generates the probe request frame in which the address of its own node is described as the transmission source address. The modulation unit 12 modulates the probe request frame, and transmits the modulated probe request frame from the antenna 7. However, when step A2 moves to step B1, the power control unit 11 specifies the predetermined transmission power [D], and the modulation unit 12 transmits the probe request frame by the transmission power [D] . Each node that receives the probe request frame transmits the probe response frame. The node that transmits the probe request frame receives the probe response frame. In other words, the antenna 7 receives the probe response frame, and the demodulation unit 13 demodulates the probe response frame. The counter 18 counts the number of received probe response frames (or the number of nodes that have responded to the probe request frame). The operation as above is performed in step B1.

Further, in step B1, the counter 18 counts the number of probe response frames that are received in the monitoring time from when the probe request frame is transmitted. The monitoring time is predetermined. For example, when the probe request frame is transmitted from the modulation unit 12, the counter 18 activates a timer (not shown) included in the radio transmission/reception device 1, and counts the number of probe response frames that are received to when the monitoring time has been passed by referring to the timer.

Note that the node that has received the probe request frame transmits the probe response frame according to the operation below. The demodulation unit 13 of the node that has received the probe request frame demodulates the probe request frame, and the frame disassembling unit 15 disassembles the probe request frame into a bit string for each field and outputs it to the analysis unit 21. As a result, the transmission source address of the probe request frame is specified in the frame disassembling unit 15. The analysis unit 21 outputs the transmission source address of the probe request frame to the scanning information input/output unit 22. The scanning information input/output unit 22 specifies the transmission source address as the destination node address, and makes the frame assembling unit 14 generate the probe response frame. The modulation unit 12 modulates and transmits the probe response frame. The probe response frame is received by the node that has transmitted the probe request frame in the above step B1.

In the power control unit 11, the target value of the number of adjacent nodes (nodes in which direct data communication is available) is preset (for example, the power control unit 11 stores the target value of the number of adjacent nodes in advance). After executing the scanning of step B1, the power control unit 11 compares the number of nodes that have succeeded in the search (or the number of received probe response frames counted by the counter 18) with the target value of the number of adjacent nodes (step B2). When the both numbers match, the step moves to step B4. When they do not match, the power control unit 11 adjusts the transmission power [D] (step B3). When the number of nodes that have succeeded in the search exceeds the target value of the number of adjacent nodes, the power control unit 11 decreases the transmission power [D]. When the number of nodes that have succeeded in the search is below the target value of the number of adjacent nodes, the power control unit 11 increases the transmission power [D]. Then, the step moves to step B1, and the processing is repeated from step B1. The above operation is repeated until when it is determined that the number of nodes that have succeeded in the search is equal to the target value of the number of adjacent nodes. When the transmission power [D] is adjusted in step B3 and the step moves to step B1, the modulation unit 12 transmits the probe request frame by the adjusted transmission power [D]. In this example, as the ERTS frame and the ECTS frame have fixed length and the maximum value of the adjacent node address that can be described in the adjacent node field is predetermined, the operation of steps B1 to B3 is repeated until when it is determined that the number of nodes that have succeeded in the search is equal to the target value of the number of adjacent nodes.

When it is determined in step B2 that the number of nodes that have succeeded in the search is equal to the target value of the number of adjacent nodes, the power control unit 11 determines and stores the transmission power that has been specified as the transmission power of the probe request frame in the previous step B1 as the transmission power [D] for data communication (step B4).

Further, when it is determined that the number of nodes that have succeeded in the search is equal to the target value of the number of adjacent nodes, the node that has executed the scanning stores the address of the node that has succeeded in the search in the adjacent node address storage unit 25 (step B5). More specifically, the frame disassembling unit 15 disassembles each probe response frame received from each node that is searched into a bit string for each field, and outputs it to the analysis unit 21. The analysis unit 21 outputs the bit string indicating the transmission source address of each probe response frame to the scanning information input/output unit 22, and the scanning information input/output unit 22 stores the transmission source address in the adjacent node address storage unit 25 as the adjacent node address. At this time, the scanning information input/output unit 22 also stores the number of adjacent node addresses (or the number of adjacent nodes) in the adjacent node address storage unit 25. However, the number of adjacent nodes may not be stored in the adjacent node address storage unit 25.

Next, the node determines the transmission power [C] that is specified in the control communication as is similar to the determination operation of the transmission power [D]. When step B5 moves to step B6, the node carries out the scanning by the preset transmission power [C] (step B6). In step B6, the frame assembling unit 14 generates the probe request frame in which the address of its own node is described as the transmission source address. The modulation unit 12 modulates the probe request frame, and transmits the modulated probe request frame from the antenna 7. However, when step B5 moves to step B6, the power control unit 11 specifies the predetermined transmission power [C], and the modulation unit 12 transmits the probe request frame by the transmission power [C]. Each node that has received the probe request frame transmits the probe response frame. The node that has transmitted the probe request frame receives the probe response frame. In other words, the antenna 7 receives the probe response frame, and the demodulation unit 13 demodulates the probe response frame. The counter 18 counts the number of probe request frames that are received (or the number of nodes that have responded to the probe request frame). In step B6, the above operation is executed.

Further, in step B6, the counter 18 counts the number of probe response frames that are received in the monitoring time from when the probe request frame is transmitted, as is similar to step B1.

In the power control unit 11, the target value of the number of nodes in which transmission and reception of the control frame (ERTS frame and ECTS frame) are available is set (for example, the power control unit 11 stores the target value in advance). The target value of the number of nodes in which transmission and reception of the control frame are available is set as a value equal to or larger than the target value of the number of adjacent nodes. After executing the scanning in step B6, the power control unit 11 compares the number of nodes that have succeeded in the search (or the number of received probe response frames counted by the counter 18) with the target value of the number of nodes in which transmission and reception of the control frame are available (step B7). When both numbers match, the step moves to step B9. When they do not match, the power control unit 11 adjusts the transmission power [C] (step B8). When the number of nodes that have succeeded in the search exceeds the target value of the number of nodes that are set, the power control unit 11 decreases the transmission power [C]. When the number of nodes that have succeeded in the search is below the target value of the number of nodes, the power control unit 11 increases the transmission power [C]. Then the step moves to step B6, and the processing is repeated again from step B6. The above operation is repeated until when it is determined that the number of nodes that have succeeded in the search is equal to the target value of the number of nodes that are set. When the transmission power [C] is adjusted in step B8 and the step moves to step B6, the modulation unit 12 transmits the probe request frame by the transmission power [C] that is adjusted.

When it is determined in step B7 that the number of nodes that have succeeded in the search is equal to the target value of the number of nodes, the power control unit 11 determines and stores the transmission power that is specified as the transmission power of the probe request frame in the previous step B6 as the transmission power [C] for data communication (step B9) . At this time, the node may store the address of the node that has succeeded in the search in step B6.

As described above, the target value of the number of nodes that can transmit and receive the control frame is set to a value equal to or larger than the target value of the number of adjacent nodes. In the first exemplary embodiment, the same device (radio transmission/reception device 1) determines the transmission power [D] and the transmission power [C], transmits the data frame by the transmission power [D], and transmits the ERTS frame and the ECTS frame by the transmission power [C]. Accordingly, the transmission power [C] is the transmission power that is equal to or larger than the transmission power [D], and the radio wave arrival distance of the radio wave transmitted by the transmission power [C] is equal to or larger than the radio wave arrival distance of the radio wave transmitted by the transmission power [D]. Accordingly, the ERTS frame and the ECTS frame transmitted by the transmission power [C] are at least received by the adjacent nodes. As such, by determining the target value of the number of nodes that can transmit and receive the control frame as the value that is equal to or larger than the target value of the number of adjacent nodes, the power control unit 11 determines the transmission power [C] so that at least each adjacent node is able to receive the ERTS frame and the ECTS frame.

According to the above operation, the node determines the transmission power [D] specified (used) in the data communication and the transmission power [C] specified (used) in the control communication. After that, the step goes back to step A2, and waits for the opportunity to execute next scanning (step B10).

Next, the operation in which the node performs data transmission will be described. As an example, it is assumed that the node (4) shown in Figs. 5A and 5B transmits the data to the node (3). However, the similar operation is performed even when another node performs data transmission. In the example shown in Figs. 5A and 5B, each of the node addresses of seven nodes is assumed to be "1" to "7" for the purpose of description. Further, when each node is shown in Figs. 5A and 5B, each node address of each node is shown with parenthesis. For example, the node with the node address "1" is shown as node (1). Further, as it is assumed that the node (4) transmits data to the node (3) in this example, the node (4) is shown as transmitting node (4), and the node (3) as receiving node (3).

Further, it is assumed that the nodes (1) to (7) complete the operations of steps A1 and A2, and steps B1 to B10, and determine the transmission powers [D] and [C]. The nodes (1) to (7) in the radio communication system shown in Figs. 5A and 5B are able to directly communicate with the node including the node address having a difference of "1" with the own node address ((1) to (7) in this example) by the transmission power [D]. For example, the node (4) is able to perform data communication directly with the nodes (3) and (5) by the transmission power [D]. Further, the nodes (1) to (7) are able to perform control communication directly with the node including a node address having a difference of "2" or smaller with the own node address (transmission and reception of the ERTS frame and the ECTS frame) by the transmission power [C]. For example, the node (4) is able to directly communicate with the nodes (3), (5), (2), and (4) by the transmission power [C]. The table shown in Fig. 5B shows the node address of the node in which each node is able to perform communication by the transmission power [D] and the node address of the node in which each node is able to perform communication by the transmission power [C].

The transmitting node (4) executes the carrier sense when the scanning is not executed (NO in step A2). In this case, the transmitting node (4) checks whether another node is executing the data communication or the control communication (step C1). In step C1, the carrier sense execution unit (not shown) of the transmitting node (4) determines that another node is executing the data communication or the control communication upon detection of the carrier wave transmitted by another node (YES in step C1). On the other hand, when the carrier wave transmitted by another node is not detected, it is determined that another node neither executes the data communication nor the control communication (NO in step C1). The control information input/output means 24 receives the determination result from the radio transmission/reception device 1.

Further, the control information input/output means 24 determines whether the node address of the node that will be the data transmission destination is stored in the NAV setting node address storage unit 26 (step C2). When another node does not perform data communication (NO in step C1) and the address of the node that will be the data transmission destination is not stored in the NAV setting node address storage unit 26 (NO in step C2), the control information input/output means 24 specifies the node address of the node that will be the data transmission destination and makes the frame assembling unit 14 generate the ERTS frame (step C3). At this time, the control information input/output means 24 reads the number of adjacent nodes and the node address of the adj acent node of its own node from the adj acent node address storage unit 25, and outputs the control information including the number of adjacent nodes and the adjacent node address to the frame assembling unit 14. The address of the adjacent node stored in the adjacent node address storage unit 25 is the address of the node in which direct communication is available by the transmitting node (4) by the transmission power [D] stored at step B4. When the number of adjacent nodes is not stored in the adjacent node address storage unit 25, the number of adjacent node addresses stored in the adjacent node address storage unit 25 may be counted, and this value may be set to the number of adjacent nodes. The frame assembling unit 14 generates the ERTS frame in which the number of adjacent nodes and the node address of the adjacent node in which direct communication is available by the transmission power [D] is described. After that, the modulation unit 12 of the transmitting node (4) modulates the ERTS frame, and performs broadcast transmission of the modulated ERTS frame by the transmission power [C] specified by the power control unit 11 (step C4). At step C4, the power control unit 11 specifies the transmission power [C] determined at step B9, and the modulation unit 12 transmits the ERTS frame by the transmission power [C].

The node that transmits the ERTS frame and the ECTS frame describes the destination node address in the ERTS frame and the ECTS frame. In the radio communication, the frame transmitted from the node is received by all the nodes in the radio arrival range of the node. The node that has received the frame gives proper processing to the received frame with reference to the type of the received frame, the destination node address, and the transmission source node address. The nodes other than the node specified by the destination node address (node that can receive the frame) also receive the ERTS frame and the ECTS frame. In the following description, the transmission of the ERTS frame and the ECTS frame is described as "broadcast transmission" for the sake of convenience.

When it is determined in step C2 that the node address of the node that will be the data transmission destination is stored in the NAV setting node address storage unit 26 (YES in step C2), the step moves to step A2 to repeat the operation from step A2. As a result, the transmission of the ERTS frame is delayed, and the transmission of the data frame is delayed.

The transmitting node (4) that has transmitted the ERTS frame in step C4 waits until when the ECTS frame is received in which the node address of its own node is the destination node address. After receiving the ECTS frame in which the node address of its own node is the destination node address, the transmitting node (4) generates the data frame (step C5). The data is transmitted from the data processing device 3 to the node control device 2, and thus the data frame is created. Now, an example of an aspect in which the data processing device 3 outputs the data in step C5 will be described. In this example, it is assumed that the data that will be transmitted is processed in the data calculation unit 31 of the data processing device 3, and this data is the one stored in the data storage unit 32. The data calculation unit 31 reads the data from the data storage unit 32, and outputs the data to the data input/output unit 23. The data input/output device 23 outputs the data to the frame assembling unit 14. The frame assembling unit 14 generates the data frame storing the data. At this time, the frame assembling unit 14 describes the node address of its own node in the data frame as the transmission source node address, and describes the address of the node that will be the destination as the destination node address. The node address of the node that will be the destination and the node address of its own node may be output to the frame assembling unit 14 by the data input/output unit 23.

After step C5, the modulation unit 12 modulates the data frame, and transmits the modulated data frame by the transmission power [D] specified by the power control unit 11 (step C6). In step C6, the power control unit 11 specifies the transmission power [D] determined in step B4, and the modulation unit 12 transmits the data frame by the transmission power.

Next, the operation in which the node receives the frame will be described.

First, the operation of receiving the ERTS frame will be described. The above description is of a case in which the transmitting node (4) shown in Figs. 5A and 5B transmits the ERTS frame. In the following description, a case in which nodes other than the node (4) receive the ERTS will be described.

The ERTS frame broadcasted by the transmitting node (4) in step C4 is received by the nodes (3), (5), (2), and (6). The node address of the receiving node (3) is described in the destination node address field of the ERTS frame, and the node address of the transmitting node (4) is described in the transmission source node address field.

When the scanning is not executed (NO in step A2), each node may receive the frame from another node when it is determined that another node executes the data communication or the control communication by the carrier sense execution unit (not shown). When the demodulation unit 13 of the nodes (3), (5), (2), and (6) receives the radio signal (frame) through the antenna 7, it demodulates the radio signal. The type identification unit 19 identifies whether the received frame is the data frame by referring to the frame control field 91 of the demodulated frame (step D1).

When the received frame is not the data frame (NO in step D1), the type identification unit 19 identifies whether the received frame is the ERTS frame or the ECTS frame (step E1). When the received frame is the ERTS frame, the address judging unit 17 of the nodes (3), (5), (2), and (6) judges whether the destination node address described in the received ERTS frame matches the node address of its own (its own node) (step E2).

The address judging unit 17 of the receiving node (3) judges that the destination node address of the received ERTS frame matches the node address of its own (YES in step E2). Then, the frame disassembling unit 15 of the receiving node (3) disassembles the received ERTS frame into a bit string for each field, and outputs each bit string to the analysis unit 21. The analysis unit 21 determines that each bit string is the bit string disassembled from the control frame, and outputs each bit string to the control information input/output unit 24. The control information input/output unit 24 outputs the transmission source address described in the received ERTS frame to the frame assembling unit 14 as the information that will be the destination node address, and outputs the node address of its own node to the frame assembling unit 14 as the information that will be the destination node address. Further, the control information input/output unit 24 reads the number of adjacent nodes and the node address of the adjacent node of its own node from the adj acent node address storage unit 25, and outputs the number of adjacent nodes and the adjacent node address to the frame assembling unit 14. Note that the adj acent node address is the node address stored in the adjacent node address storage unit 25 by the node (3) in step B5, and is the node address of the node in which direct communication is available by the node (3) by the transmission power [D]. The frame assembling unit 11 generates the ECTS frame in which the destination node address, the transmission source node address, the adjacent node address, and the number of adjacent nodes are described. Then, the modulation unit 12 modulates the generated ECTS frame to broadcast the modulated ECTS frame by the transmission power [C] specified by the power control unit 11 (step E3). The power control unit 11 specifies the transmission power [C] determined in step B9, and the modulation unit 12 transmits the ECTS frame by the transmission power. After step E3, the step moves to step A2.

As described above, the ECTS frame is transmitted by the node that has received the ERTS frame, and in which the destination node address included in the ERTS frame matches the node address of its own (node that is to receive the data frame).

Further, the address judging unit 17 of the nodes (5), (2), and (6) judges that the destination node address of the received ERTS frame does not match the node address of its own (NO in step E2). When the destination node address of the received ERTS frame does not match the node address of its own, each node checks whether the destination node address or the transmission source node address of the ERTS frame is included in the node address stored in the adjacent node address storage unit 25 in step B5 (step E4) . More specifically, the frame disassembling unit 15 of the nodes (5), (2), and (6) disassembles the received ERTS frame into a bit string for each field, and outputs each bit string to the analysis unit 21. The analysis unit 21 determines that each bit string is the bit string disassembled from the control frame, and outputs each bit string to the control information input/output unit 24. The control information input/output unit 24 determines whether the node address that matches the destination node address or the transmission source node address described in the received ERTS frame is stored in the adjacent node address storage unit 25. The control information input/output unit 24 outputs the determination result to the NAV setting unit 16 of the radio transmission/reception device 1. Further, when the determination is made in step E2, the address judging unit 17 outputs the determination result to the NAV setting unit 16.

The NAV setting unit 16 sets the NAV period when it is determined that the destination address described in the received ERTS frame does not match the address of its own node and the destination node address or the transmission source node address of the ERTS frame is included in the node address stored in the adjacent node address storage unit 25 of its own node (YES in step E4) (step E5). Accordingly, when it is determined in step E2 that the destination node address of the received frame does not match the node address of its own and determined in step E4 that the node address that matches the destination node address or the transmission source node address described in the received ERTS frame is stored in the adjacent node address storage unit 25, the NAV setting unit 16 sets the NAV period for the NAV setting period (duration) described in the ERTS frame demodulated by the demodulation unit 13. In summary, the NAV setting unit 16 stops the frame generating operation of the frame assembling unit 14 during the NAV setting period described in the ERTS frame. As a result, the frame transmission from its own node is disabled. In this example, the step moves from step E2 to step E4, and it is determined that there is a common address with the adjacent node address stored in the NAV setting node address storage unit 26 in the adjacent node address described in the ERTS frame (YES in step E4), the nodes (5) and (2) set the NAV period corresponding to the time width described in the duration field of the ERTS frame.

The NAV setting unit 16 setting the NAV period in step E5 checks the timer (not shown) included in the radio transmission/reception device 1. Then, the NAV setting unit 16 determines whether the NAV period has been terminated (step D3). When the NAV period is not terminated (NO in step D3), the frame assembling unit 14 continues to stop the frame generating operation, and the node continues to stop the data transmission operation (step D4). Then, the timer (not shown) included in the radio transmission/reception device 1 is checked again (step D5), and the operation is repeated from step D3. When the NAV period is terminated, the step moves to step A2, and the operation is performed from step A2. When the ERTS is newly received from another node (nodes other than the transmitting node (4)) and the step moves to step E5 when the processing of steps D3 to D5 is repeated during the NAV setting period, completion of the NAV period is delayed to set the NAV period during the duration described in the ERTS frame.

When it is determined in step E4 that neither the destination node address nor the transmission source node address of the ERTS frame is included in the node address stored in the adjacent node address storage unit 25 of its own node (NO in step E4), the control information input/output unit 24 refers to the node address described in the adjacent node address field of the received ERTS frame, compares the node address with a node address stored.in the adjacent node address storage unit 25 of its own node, and determines whether there is a common node address (step E6).

When there is a node address that is common to the node address described in the adjacent node address field of the received ERTS frame and the node address stored in the adjacent node address storage unit 25 of its own node (YES in step E6), the control information input/output unit 24 stores the common node address and the NAV setting period described in the received ERTS frame in the NAV setting node address storage unit 26 while being made correspondent to each other (step E7). In this example, the node (6) performs the operation of steps E2, E4, E6, and E7 in this order. When the process of step B5 is performed, the node (6) stores the node address of the node (5) which is the adjacent node of its own node in the adjacent node address storage unit 25. Further, the node address of the node (5), which is the adjacent node of the transmitting node (4) (node in which the communication is possible by the transmitting node (4) by the transmission power [D]), is described in the adjacent node address field of the ERTS node received by the node (6) from the transmitting node (4). Thus, the control information input/output unit 24 of the node (6) stores the node address of the node (5) and the NAV setting period of the node (5) in the NAV setting node address storage unit 26 while being made correspondent to each other in step E7. Here, the NAV setting period of the node (5) is the duration described in the ERTS frame received by the node (6). Thus, the duration described in the received ERTS frame may be stored in the NAV setting node address storage unit 26 as the NAV setting period in step E7.

That the node address and the NAV setting period are stored in the NAV setting node address storage unit 26 in step E7 means that the node of the node address is in the NAV period. The control information input/output unit 24 constantly monitors the NAV setting node address storage unit 26, and when it is determined that the node address of the node that will be the data transmission destination is stored in the NAV setting node address storage unit 26 (YES in step C2) when the step moves to step C2, the step moves to step A2 to repeat the operation from step A2. As a result, the data transmission is delayed. In this example, the node address of the node (5) and the NAV setting period are stored in the NAV setting node address storage unit 26 while being made correspondent to each other, so that the node (6) delays the data transmission to the node (5). Further, when it is determined that the NAV setting period stored in the NAV setting node address storage unit 26 has been terminated by referring to the timer (not shown) included in the node control device 2, the control information input/output unit 24 deletes the NAV setting period and the node address corresponding to the NAV setting period from the NAV setting node address storage unit 26. Then, the step moves to C2, and when the node address that will be the destination of the data frame is not stored in the NAV setting node address storage unit 26, the processing is performed from step C3, and the data transmission can be made.

Now, a case in which there is a node that does not satisfy the condition of step E6 is described. Specifically, when there is no node address that is common to the node address described in the adjacent node address field of the received ERTS frame and the node address stored in the adjacent node address storage unit 25 of its own node, the node receiving the ERTS frame discards the received ERTS frame, and the step goes back to step A2. For example, when the ERTS frame transmitted from the transmitting node (4) is received by the node (7), the node (7) determines NO in any step of E2, E4, and E6 and discards the ERTS frame, and the step goes back to step A2. Although the ERTS frame transmitted from the transmitting node (4) by the transmission power [C] is received by the nodes (3), (5), (2), and (6), the node (7) may unexpectedly receive the ERTS frame by the fluctuation of the radio propagation characteristics.

Next, the operation in which the node receives the ECTS frame will be described. In the following description, a case in which the receiving node (3) receives the ERTS frame from the transmitting node (4) and broadcasts the ECTS frame in step E3 will be described, as an example. In this example, the receiving node (3) describes the node address of the transmitting node (4) as the destination node address, and transmits the ECTS frame in which the node address of the node (3) itself is described as the transmission source node address. In this example, the ECTS frame transmitted by the receiving node (3) is received by (2), (4), (1), and (5) in the radio communication system shown in Figs. 5A and 5B.

Each node determines whether or not the received frame is the data frame in a similar way as the operation of step D1 described above (step D1). Specifically, when the demodulation unit 13 receives the radio signal (frame) through the antenna 7, it demodulates the radio signal, and the type identification unit 19 refers to the frame control field 91 of the demodulated frame to determine whether or not the received frame is the data frame (step D1). When the received frame is not the data frame (NO in step D1), the type identification unit 19 determines whether the received frame is the ERTS frame or ECTS frame (step E1). When the received frame is the ECTS frame, the address judging units of the nodes (2), (4), (1), and (5) determine whether the destination node address described in the received ECTS frame matches the node address of its own (own node) (step E8).

The address judging unit 17 of the transmitting node (4) determines that the destination node address of the received ECTS frame matches the node address of its own (YES in step E8). In this case, the operations of steps C5 and C6 described above are performed. In other words, the data input/output unit 23 outputs the data transmitted from the data calculation unit 31 to the frame assembling unit 14, and the frame assembling unit 14 generates the data frame (step C5). Then, the modulation unit 12 modulates the data frame, and transmits the modulated data frame by the transmission power [D] specified by the power control unit 11 (step C6).

The address judging units 17 of the nodes (2), (1), and (5) determine that the destination node address of the received ECTS frame does not match the node address of its own (NO in step E8). When the destination node address of the received ECTS frame does not match the node address of its own, each node checks whether the destination node address or the transmission source node address described in the received ECTS frame is included in the node address stored in the adjacent node address storage unit 25 in step B5 as is similar to step E4 (step E8a). More specifically, the frame disassembling units 15 of the nodes (2), (1), and (5) disassemble the received ECTS frame into a bit string for each field and output each bit string to the analysis unit 21. The analysis unit 21 determines that each bit string is the bit string disassembled from the control frame, and outputs each bit string to the control information input/output unit 24. The control information input/output unit 24 determines whether the node address that matches the destination node address or the transmission source node address described in the received ECTS frame is stored in the adjacent node address storage unit 25.

In this example, the control information input/output units 24 of the nodes (2) and (5) determine that the node address that matches the destination node address or the transmission source node address described in the received ECTS frame is stored in the adjacent node address storage unit 25 (step E8a). When the node address that matches the destination node address or the transmission source node address described in the received ECTS frame is stored in the adjacent node address storage unit 25 (YES in step E8a), the node already receives the ERTS frame and sets the NAV period. When receiving the ERTS frame and transmitting the ECTS frame in step E3, each node sets the duration described in the ECTS frame to be shorter than the duration described in the ERTS frame. Accordingly, the node that already receives the ERTS frame and sets the NAV period does not delay the NAV period when receiving the ECTS frame corresponding to the ERTS frame. Accordingly, when the node address that matches the destination node address or the transmission source node address described in the received ECTS frame is stored in the adjacent node address storage unit 25 (YES in step E8a), the node discards the received ECTS frame, and the step goes back to step A2. In this example, the nodes (2) and (5) discard the received ECTS frame after determination in step E8a, and the step goes back to step A2.

When the node address that matches the destination node address or the transmission source node address described in the received ECTS frame is not stored in the adjacent node address storage unit 25 (NO in step E8a), the control information input/output unit 24 refers to the node address described in the adjacent node address field of the received ECTS frame, compares the node address with a node address stored in the adjacent node address storage unit 25 of its own node, and determines whether there is a common node address (step E9).

When there is a node address that is common to the node address described in the adjacent node address field of the received ECTS frame and the node address stored in the adjacent node address storage unit 25 of its own node (YES in step E9), the control information input/output unit 24 stores the common node address and the NAV setting period described in the ERTS frame that is already received in the NAV setting node address storage unit 26 while being made correspondent to each other (step E10). The NAV setting period stored in step E10 is the NAV setting period described in the ERTS frame that has already been received before receiving the ECTS frame (ERTS frame corresponding to the received ECTS frame) . The node constantly monitors the NAV setting node address storage unit 26 of its own node, and when the data transmission is performed by setting the node address stored in the NAV setting node address storage unit 26 as the destination, the data transmission is delayed until the completion of the NAV setting period stored corresponding to the node address. Further, as already been described, when it is determined that the NAV setting period stored in the NAV setting node address storage unit 26 is terminated by referring to the timer (not shown) included in the node control device 2, the control information input/output unit 24 removes the NAV setting period and the node address corresponding to the NAV setting period from the NAV setting node address storage unit 26.

In this example, the node (1) moves from step E8a to step E9. The node (1) stores the node address of the node (2) in the adjacent node address storage unit 25 in step B5. Further, in the ECTS frame received from the receiving node (3), the node address of the node (2) is described as the adjacent node address of the node (3). Accordingly, the node (1) stores the node address of the node (2) and the NAV setting period of the node (2) in the NAV setting node address storage unit 26 while being made correspondent to each other (step E10).

The node (1) constantly monitors the NAV setting node address storage unit 26, and delays the data transmission to the node (2). When the node (1) determines by the timer (not shown) that the NAV setting period of the node (2) is terminated, the information of the node (2) is deleted from the NAV setting node address storage unit 26. Then, the step moves from step C2 to step C3, and the data transmission to the node (2) is made possible.

Next, the operation in which the node receives the data frame will be described. When the demodulation unit 13 of the node that receives the data frame transmitted by another node (for example, the receiving node (3) receiving the data frame from the transmitting node (4)) receives the radio signal (frame) through the antenna 7, the demodulation unit 13 demodulates the radio signal. The type identification unit 19 determines whether the received frame is the data frame by referring to the frame control field 91 of the demodulated frame (step D1). When the received frame is the data frame, the address judging unit 17 of the node receiving the data frame refers to the destination node address field of the data frame to determine whether the destination node address described in the destination node address field matches the address of its own node. When they do not match, the data frame is discarded. When they match, the frame disassembling unit 15 disassembles the data frame into each bit string for each field, and outputs it to the analysis unit 21. The analysis unit 21 outputs the data to the data input/output unit 23, and the data input/output unit 23 outputs the data to the data calculation unit 31. The data calculation unit 31 stores the data in the data storage unit 31, and performs the processing using the received data (step D2).

Next, an exemplary advantage according to the first exemplary embodiment will be described.

In the present invention, the node notifies the adjacent node and the node adjacent to the adjacent node of the node address of the adjacent node of its own node, so as to solve the problem caused by NAV blocking or NAV redundancy setting (extra power consumption, lowering of communication rate). The adjacent nodes that are adjacent to the "adjacent nodes that are adjacent to the transmitting node and the receiving node that execute the data communication" are made to receive the ERTS frame and the ECTS frame, to determine the node in the NAV setting period, and to store the node address of the node. The node that stores the node address of the node in the NAV setting period is able to stop transmission and retransmission of the ERTS frame to the node in the NAV setting period, and thus, it is possible to prevent degradation of power consumption efficiency of the node and lowering of the communication rate.

In the first exemplary embodiment, the node in the radio communication system adjusts the transmission power [D] used for data communication and the transmission power [C] used for control communication, so as to be able to perform control communication with the "node (adjacent node) in which data communication is available" (steps B4, B9). Further, the transmitting node and the receiving node specify (use) the transmission power [C] for exchange of the ERTS frame and the ECTS frame including the address of the node in which data communication is available, so as to be able to set the NAV period in the "nodes that can perform direct data communication with the transmitting node and the receiving node" (step E5) and to delay the data transmission of the "node that tries to perform data communication to the node in the NAV period" by the NAV setting period (steps E7, E10).

Accordingly, it is possible to suppress the transmission and retransmission of the ERTS frame to the node in the NAV setting, and "NAV blocking" and "NAV redundancy setting" can be avoided. Thus, the data communication that does not produce radio interference can be performed while suppressing the degradation of the power consumption efficiency of the node and the lowering of the communication rate.

### Second exemplary embodiment

Next, the second exemplary embodiment according to the present invention will be described. Note that the data structure of the ERTS frame and the ECTS frame transmitted and received by the nodes (radio communication devices) according to the second exemplary embodiment is the same as that of the first exemplary embodiment.

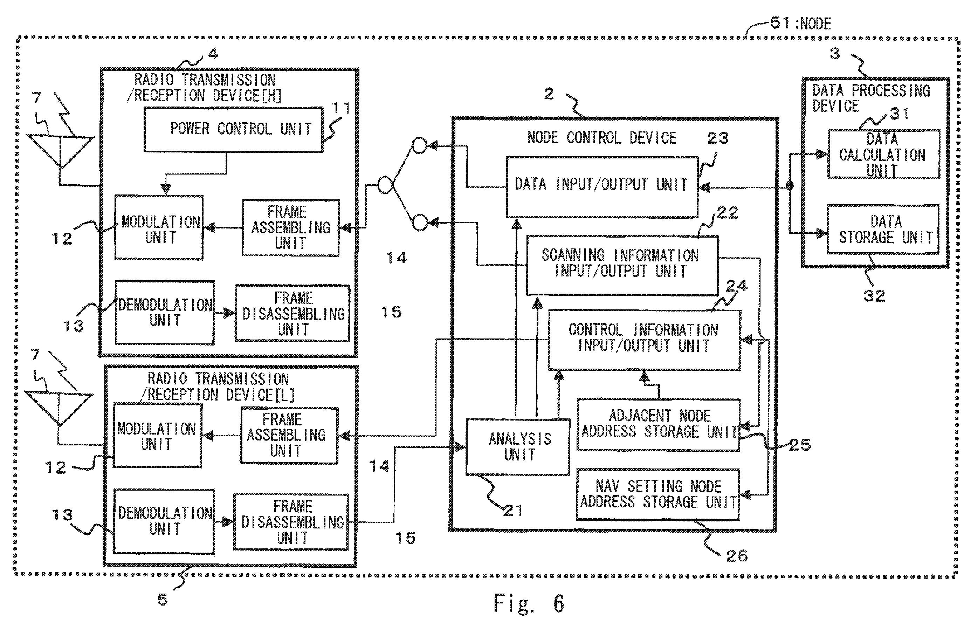

Fig. 6 is a block diagram showing a configuration example of a node (radio communication device) according to the second exemplary embodiment. In the second exemplary embodiment, the node 51 includes a node control device 2, a data processing device 3, a first radio transmission/reception device 4, and a second radio transmission/reception device 5. The components identical to those of the first exemplary embodiment are denoted by the identical reference symbols, and the detailed description will be omitted.

The second exemplary embodiment is different from the first exemplary embodiment in that the node 51 includes a first radio transmission/reception device 4 and a second radio transmission/reception device 5.

The configuration of the first radio transmission/reception device 4 is the same as that of the radio transmission/reception device 1 in the first exemplary embodiment. In Fig. 6, the NAV setting unit 16, the address judging unit 17, the counter 18, and the type identification unit 19 are not shown. However, in the example shown below, the first radio transmission/reception device 4 includes a power control unit 11, a modulation unit 12, a demodulation unit 13, a frame assembling unit 14, and a frame disassembling unit 15. Further, as is similar to the radio transmission/reception device 1 in the first exemplary embodiment, the first radio transmission/reception device 4 includes the NAV setting unit 16, the address judging unit 17, the counter 18, and the type identification unit 19.

Further, in the second exemplary embodiment, at least the second radio transmission/reception device 5 does not need to include the power control unit 11, and the second radio transmission/reception device 5 does not include the power control unit 11. In Fig. 6, the NAV setting unit 16, the address judging unit 17, and the type identification unit 19 are not shown; however, in the example shown below, the second radio transmission/reception device 5 includes a modulation unit 12, a demodulation unit 13, a frame assembling unit 14, and a frame disassembling unit 15, and further includes the NAV setting unit 16, the address judging unit 17, and the type identification unit 19 as is similar to the radio transmission/reception device 1 in the first exemplary embodiment.

Further, as shown in Fig. 6, the first radio transmission/reception device 4 and the second radio transmission/reception device 5 each includes the antenna 7.

The first radio transmission/reception device 4 and the second radio transmission/reception device 5 have different radio wave arrival distance (radio wave arrival distance) with each other, and the radio wave arrival distance of the second radio transmission/reception device 5 needs to be longer than that of the first radio transmission/reception device 4. This radio wave arrival distance is the one in which there is no obstacle. In other words, the radio wave arrival distance of the second radio transmission/reception device 5 needs to be longer than that of the first radio transmission/reception device 4 when there is no obstacle around the node 51. In the first radio transmission/reception device 4 and the second radio transmission/reception device 5, radio propagation characteristics of at least one of frequency band, power consumption, and diffraction property is different, and the radio wave arrival distance of the second radio transmission/reception device 5 needs to be longer than that of the first radio transmission/reception device 4.

Further, the second radio transmission/reception device 5 and the first radio transmission/reception device 4 have different frequency bands with each other. The second radio transmission/reception device 5 preferably has the radio propagation characteristics having higher diffraction property, and smaller power consumption compared with the first radio transmission/reception device 4.

The node control device 2 includes a scanning information input/output unit 22, a data input/output unit 23, a control information input/output unit 24, an adjacent node address storage unit 25, an NAV setting node address storage unit 26, and an analysis unit 21.

In the second exemplary embodiment, the scanning information input/output unit 22 transmits the probe request frame and the probe response frame using the first radio transmission/reception device 4 when performing scanning. In other words, the scanning information input/output unit 22 makes the frame assembling unit 14 of the first radio transmission/reception device 4 generate the probe request frame and the probe response frame, and the modulation unit 12 of the first radio transmission/reception device 4 modulates the probe request frame and the probe response frame and transmits the modulated frames. The transmission power [D] for the data communication determined after performing the scanning is stored in the power control unit 11. The power control unit 11 specifies the transmission power [D] when the modulation unit 12 of the first radio transmission/reception device 4 modulates the frames and transmits the modulated frames.

The modulation unit 12 of the second radio transmission/reception device 5 transmits the modulated ERTS frame and the ECTS frame by the predetermined transmission power.

Further, in the second exemplary embodiment, the control information input/output unit 24 transmits the control frame (ERTS frame and ECTS frame) using the second radio transmission/reception device 5 when executing the control communication. In other words, the control information input/output unit 24 makes the frame assembling unit 14 of the second radio transmission/reception device 5 generate the control frame, and the modulation unit 12 of the second radio transmission/reception device 5 modulates the control frame and transmits the modulated frame.

Further, in the second exemplary embodiment, the data input/output unit 23 transmits the data frame by the transmission power specified by the power control unit 11 using the first radio transmission/reception device 4 when executing the data communication. In other words, the data input/output unit 23 makes the frame assembling unit 14 of the first radio transmission/reception device 4 generate the data frame, and the modulation unit 12 of the first radio transmission/reception device 4 modulates the data frame and transmits the modulated data frame.

The operation in which the frame assembling unit 14 of the first radio transmission/reception device 4 and the frame assembling unit 14 of the second radio transmission/reception device 5 generate the frames is the same as the frame assembling unit 14 (see Fig. 2) in the first exemplary embodiment.

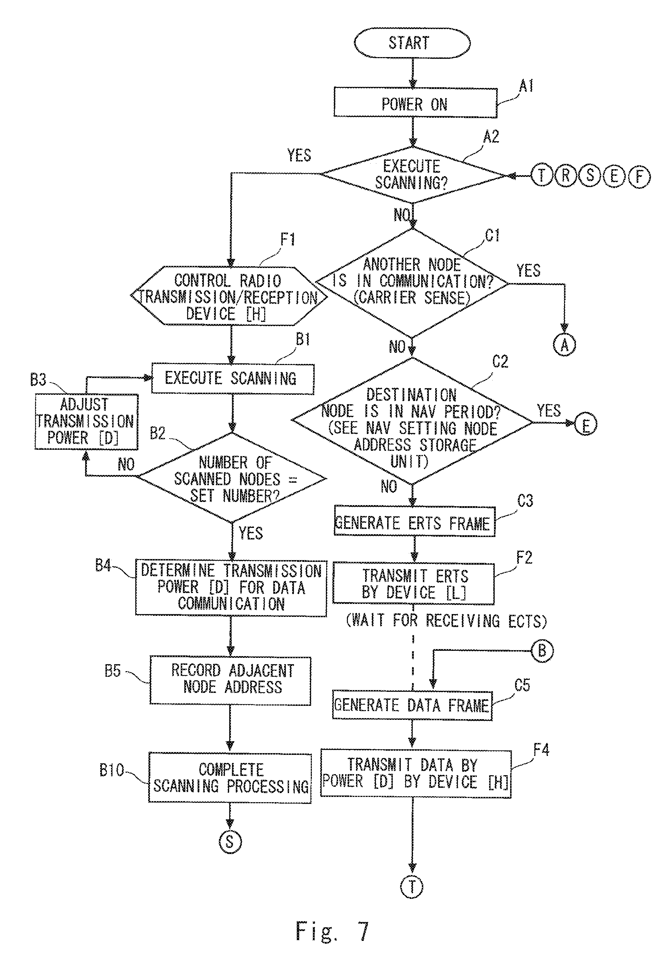

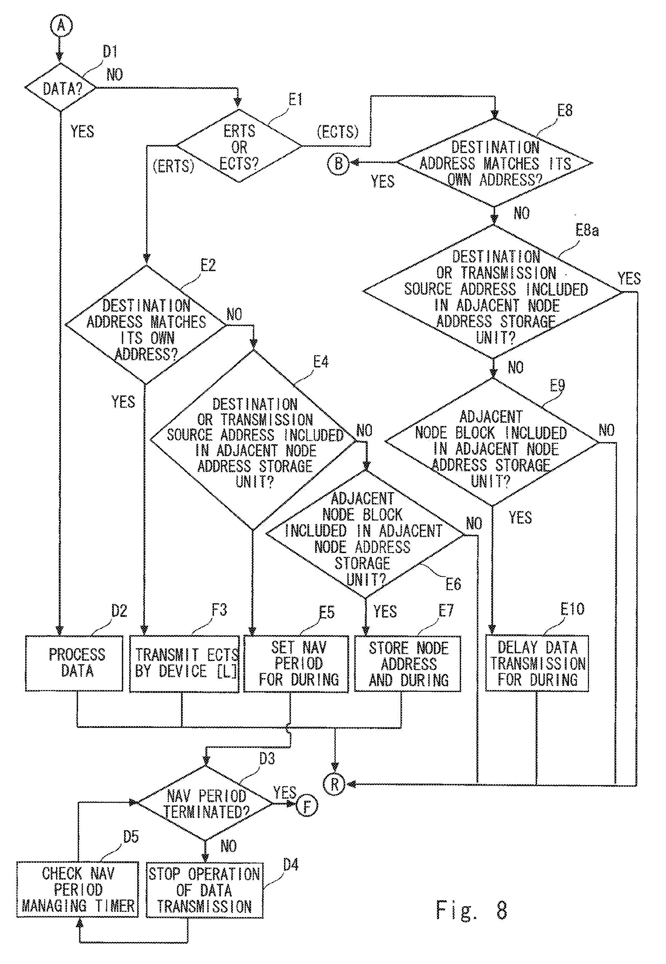

Next, the operation of the node according to the second exemplary embodiment will be described. Figs. 7 and 8 are flow charts showing the example of a process flow of the nodes (radio communication devices) according to the second exemplary embodiment. The operations identical to those of the first exemplary embodiment are denoted by the identical reference symbols as Figs. 3 and 4, and the detailed description will be omitted. Note that, in Figs. 7 and 8, the first radio transmission/reception device 4 is shown as device [H], and the second radio transmission/reception device 5 as device [L].

After the device is powered on, it is determined whether the scanning is executed (step A2 after step A1). This operation is the same as that of the first exemplary embodiment.

In the second exemplary embodiment, when it is determined that the scanning is executed (YES in step A2), the first radio transmission/reception device 4 executes the scanning to determine the transmission power [D] (step F1). The first radio transmission/reception device 4 performs the same processing as steps B1 to B5 executed by the nodes of the first exemplary embodiment as the processing of step F1. Each component of the first radio transmission/reception device 4 performs the same processing as when the radio transmission/reception device 1 of the first exemplary embodiment performs the processing of steps B1 to B5. In summary, the frame assembling unit 14 of the first radio transmission/reception device 4 generates the probe request frame. The modulation unit 12 of the first radio transmission/reception device 4 modulates the probe request frame, and transmits the modulated probe request frame from the antenna 7. After that, the counter 18 of the first radio transmission/reception device 4 counts the number of probe response frames that are received (or the number of nodes that have responded to the probe request frame). The power control unit 11 compares the number of nodes that have succeeded in the search (or the number of received probe response frames counted by the counter 18) with the target value of the number of adjacent nodes, and adjusts the transmission power. This operation is repeated until when it is determined that the number of nodes that have succeeded in the search is equal to the target value of the number of adjacent nodes (steps B1 to B3). When the number of nodes that have succeeded in the search is equal to the target value of the number of adjacent nodes, the power control unit 11 determines the transmission power specified as the transmission power of the probe request frame in the previous step B1 as the transmission power[D] for data communication to store the transmission power (step B4). Further, the node executing the scanning stores the address of the node that has succeeded in the search in the adjacent node address storage unit 25 (step B5). Then, the step goes back to step A2, and waits for the opportunity to execute the next scanning (step B10).

As the second radio transmission/reception device 5 transmits the modulated ERTS frame and the ECTS frame by the predetermined transmission power, it does not execute the scanning.

In the second exemplary embodiment, when it is determined that the scanning is not performed (NO in step A2), the node performs the operation from step C1. The operations of steps C1 to C3 and step C5 are the same as those of the first exemplary embodiment. After the ERTS frame is generated in step C3, the modulation unit 12 of the second radio transmission/reception device 5 modulates the ERTS frame to transmit the modulated frame by the predetermined transmission power (step F2). The node that transmits the ERTS frame in step F2 waits until the reception of the ECTS frame in which the node address of its own node is the destination node address. After receiving the ECTS frame in which the node address of its own node is the destination node address, the data frame is generated (step C5). After step C5, the modulation unit 12 of the first radio transmission/reception device 4 transmits the data frame by the transmission power [D] specified by the power control unit 11 (step F4). In step F4, the power control unit 11 specifies the transmission power [D] determined in step B4, and the modulation unit 12 transmits the data frame by the transmission power.

In step C3, the control information input/output unit 24 makes the frame assembling unit 14 of the second radio transmission/reception device 5 generate the ERTS frame. Further, in step C5, the data input/output unit 23 makes the frame assembling unit 14 of the first radio transmission/reception device 4 generate the data frame.

Further, the first radio transmission/reception device 4 and the second radio transmission/reception device 5 of the node that has received the frame perform the operations from step D1, as is similar to the first exemplary embodiment. The operations of steps D1 to D5, E1, E2, E4 to E10 are similar to those of the first exemplary embodiment. However, when it is determined in step E2 that the destination node address of the ERTS frame that is received matches the node address of its own (YES in step E2), the control information input/output unit 24 makes the frame assembling unit 14 of the second radio transmission/reception device 5 generate the ECTS frame, and the modulation unit 12 of the second radio transmission/reception device 5 modulates the ECTS frame and transmits the modulated frame by the predetermined transmission power (step F3). At this time, the operation in which the control information input/output unit 24 makes the frame assembling unit 14 of the second radio transmission/reception device 5 generate the ECTS frame is similar to the operation in which the control information input/output unit 24 makes the frame assembling unit 14 generate the ECTS frame in the first exemplary embodiment.

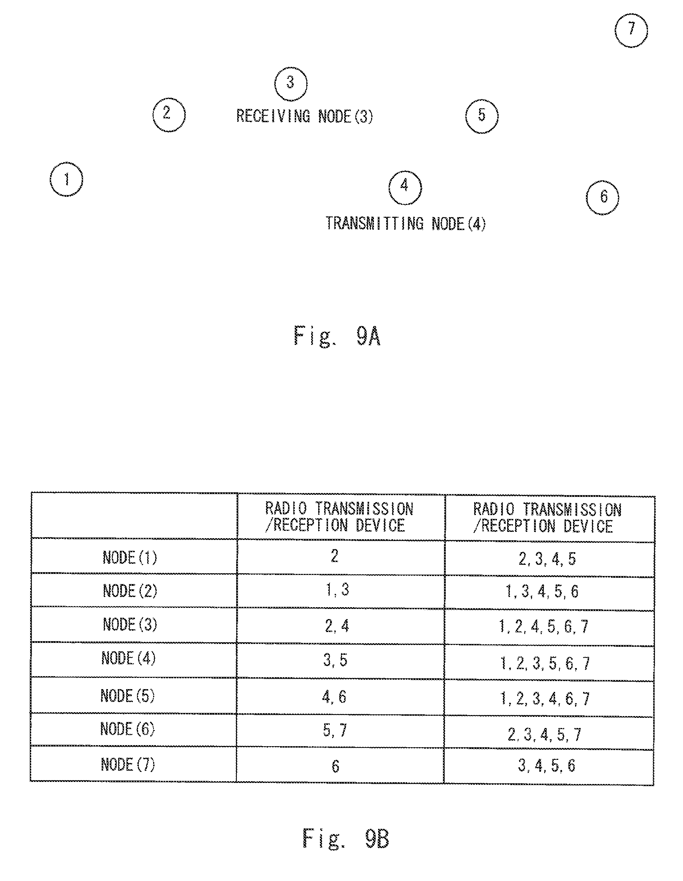

Figs. 9A and 9B are explanation diagrams showing the example of the radio communication system including a plurality of nodes in the second exemplary embodiment. In Figs. 9A and 9B, a radio communication system including seven nodes is shown as an example. In the example shown in Figs. 9A and 9B, the node addresses of the seven nodes are shown as "1" to "7", respectively, for the sake of convenience. Further, when each node is shown in Figs. 9A and 9B, each node address of each node is shown with parenthesis. The table shown in Fig. 9B shows nodes which are within the range of the radio signal transmitted by the transmission power [D] determined by the first radio transmission/reception device 4 in step B4 and nodes which are within the range of the radio signal transmitted by the predetermined transmission power by the second radio transmission/reception device 5. As shown in Fig. 9B, the radio signal transmitted by the first radio transmission/reception device 4 of each node can reach the node including the node address having a difference of "1" with the own node address. Further, the radio signal transmitted by the second radio transmission/reception device 5 of each node can reach the node including the node address having a difference of "4" with the own node address. Hereinafter, the operation of each node will be described taking a case in which the node (4) transmits the data to the node (3) as an example. Hereinafter, the node (4) is described as transmitting node (4) and the node (3) as receiving node (3).

The transmitting node (4) broadcasts the ERTS frame generated in the frame assembling unit 14 by the second radio transmission/reception device 5 (step F2).

The ERTS frame transmitted by the transmitting node (4) is received by the nodes (1), (2), (3), (5), (6), and (7).

After receiving the ERTS frame, the receiving node (3) broadcasts the ECTS frame by the second radio transmission/reception device 5 (step F3). In the radio communication system shown in Figs. 9A and 9B, the ECTS frame that is broadcasted by the receiving node (3) in step F3 is received by the nodes (1), (2), (4), (5), (6), and (7).

After receiving the ECTS frame, the transmitting node (4) transmits the data frame to the receiving node (3) by the transmission power [D] determined in step B4 using the first radio transmission/reception device 4 (step F4).

Next, an exemplary advantage according to the second exemplary embodiment will be described.

The node of the second exemplary embodiment includes two radio transmission/reception devices of the first radio transmission/reception device 4 and the second radio transmission/reception device 5.

Also in the second exemplary embodiment, the adj acent nodes that are adjacent to the "adjacent nodes that are adjacent to the transmitting node and the receiving node that execute the data communication" are made to receive the ERTS frame and the ECTS frame, to determine the node in the NAV setting period, and to store the node address of the node. The node that stores the node address of the node in the NAV setting period is able to stop transmission and retransmission of the ERTS frame to the node in the NAV setting period. As a result, in the second exemplary embodiment as is similar to the first exemplary embodiment, it is possible to avoid "NAV blocking" and "NAV redundancy setting", and to execute the data communication that does not cause radio interference while suppressing the degradation of the power consumption efficiency of the node and the lowering of the communication rate.
In the second exemplary embodiment, the second radio transmission/reception device 5 having larger radio wave arrival distance and higher diffraction property than those of the first radio transmission/reception device 4 is used for the control communication, whereby the number of times of scanning is suppressed to one by the second radio transmission/reception device 5. As a result, the phase of executing the scanning by the first radio transmission/reception device 4 can be omitted compared with the first exemplary embodiment.

Further, by using the second radio transmission/reception device 5 whose power consumption is smaller than the first radio transmission/reception device 4 for the control communication, the operation of adjusting the transmission power by the power control unit 11 corresponding to the type of the frames can be eliminated. In the first exemplary embodiment where only one radio transmission/reception device is provided, the transmission power specified by the power control unit 11 needs to be changed in accordance with the type of the frames (probe request frame and frame response frame, control frame, or data frame) every time the transmission is executed. On the other hand, in the second exemplary embodiment, the second radio transmission/reception device 5 transmits the control frame, and the first radio transmission/reception device 4 transmits the data frame. As such, there is no need to adjust the transmission power depending on whether the frame is the control frame or the data frame. Accordingly, the first radio transmission/reception device 4 and the second radio transmission/reception device 5 do not have to change the transmission power that is specified, and the operation of changing the transmission power that is specified can be eliminated.

Further, by using the radio transmission/reception devices having different frequency bands as the first radio transmission/reception device 4 and the second radio transmission/reception device 5, the scanning or data communication and the control communication can be executed at the same time. In the first exemplary embodiment, as the scanning or the control communication and the data communication are executed in the same radio transmission/reception device, the scanning or the control communication and the data communication need to be performed exclusively. In the second exemplary embodiment, as two radio transmission/reception devices having different frequency bands are used, the scanning or the data communication and the control communication can be concurrently performed.

In the second exemplary embodiment, the second radio transmission/reception device 5 may perform scanning to determine the transmission power [C] as is similar to the first radio transmission/reception device 4. In such a case, the second radio transmission/reception device 5 may include the power control unit 11 and the counter 18 as is similar to the first radio transmission/reception device 4. However, also in this case, the radio wave arrival distance of the radio wave transmitted from the first radio transmission/reception device 5 by the transmission power [C] is made longer than the radio wave arrival distance of the radio wave transmitted from the first radio transmission/reception device 4 by the transmission power [D].

Each of the exemplary embodiments above is of the case in which the node periodically executes scanning. Each node may receive the probe request frame from another node, and perform scanning when the node address of another node (source address described in the probe request frame) is not stored in the adjacent node address storage unit 25 of its own node (or when a new node is added to the radio communication system). In this case, the frame disassembling unit 15 disassembles the probe request frame demodulated by the demodulation unit 13 into each bit string for each field and outputs each bit string to the analysis unit 21. The analysis unit 21 outputs each bit string to the scanning information input/output unit 22, and the scanning information input/output unit 22 determines whether the transmission source address described in the probe request frame is stored in the adjacent node address storage unit 25. When it is not stored, it is determined that the scanning is executed. In this case, each node performs the determination of step A2 when receiving the probe request frame.

Furthermore, in the first and the second exemplary embodiments, the transmission power [D] is determined by repeating the operations of steps B1 to B3 to when it is determined that the number of nodes that have succeeded in the search is equal to the target value of the number of adjacent nodes. In each of the above exemplary embodiments, the transmission power [D] may be determined as follows.

For example, when the step moves from step A2 to step B1, each node that executes scanning broadcasts the probe request frame by the maximum transmission power that can be specified by the power control unit 11. When the number of probe response frames that are received (or the number of nodes that have responded to the probe request frame) is larger than the target value of the number of adjacent nodes (NO in step B2), the power control unit 11 may decrease the transmission power (step B3). Then, when the processing of steps B1 to B3 is repeated and the number of nodes that have responded to the probe request frame matches the target value of the number of adjacent nodes, the transmission power that is specified as the transmission power of the probe request frame in the previous step B1 may be determined as the transmission power[D] for data communication.

Further, the ERTS frame and the ECTS frame may not have fixed lengths but may have variable lengths. When the ERTS frame and the ECTS frame have variable lengths and the adjacent node number field 95 has two octets, the node addresses of the 65535 adj acent nodes may be described in the ERTS frame or the ECTS frame. In this case, the transmission power [D] may be determined as follows. When the step moves from step A2 to step B1, each node that executes scanning broadcasts the probe request frame in the maximum transmission power that can be specified by the power control unit 11. Then, the counter 18 of the node transmitting the probe request frame counts the number of probe response frames that are received in the monitoring time, and sets the count number to "N1". Then, when the probe response frame that is received in the monitoring time when the probe request frame is transmitted by the maximum transmission power is set to "N1", for example, the target value of the number of adjacent nodes is set to "N1/2". This is set in the internal register in the radio transmission/reception device 1 in advance. When the number of probe response frames received in the monitoring time is larger than the target value "N1/2" after step B1 (NO in step B2), the power control unit 11 decreases the transmission power (step B3) . Then, when the number of nodes that have responded to the probe request frame matches the target value "N1/2" in the processing of steps B1 to B3, the transmission power that is specified as the transmission power of the probe request frame in the previous step B1 is determined as the transmission power [D] for data communication.

Further, in scanning, the transmission power [D] that corresponds to the intended number of nodes may not be determined.

In this case, when the ERTS frame and the ECTS frame have fixed lengths, there is a method of using the transmission power in which the number of nodes that are searched is equal to or less than the number of nodes that can be described in the adjacent node address field. Similarly, when the ERTS frame and the ECTS frame have variable lengths, there is a method of using the transmission power in which the probe response frame can be received from the node whose number is the closest to the above-described "N1/2" which is the target value of the adjacent node number stored in the internal register of the radio transmission/reception device 1 in advance, for example.

In the method of determining the transmission power [D] used for the data communication as above, the number of nodes in which direct communication is available is limited by adjusting the transmission power compared with a case in which the maximum transmission power is used. In the ad-hoc network, the data transmission is possible by relaying the data to the adjacent node for the nodes that cannot perform direct communication by the multi-hop communication. Accordingly, even when the number of nodes in which direct communication is available by the node transmitting the data frame is decreased, the data communication can be made. Further, by suppressing the transmission power, the power consumption of the node can be reduced. When the node is a mobile wireless terminal such as PDA, or laptop personal computer, for example, the battery drive time can be made longer.

Furthermore, in the first exemplary embodiment, the transmission power [C] for transmitting the ERTS frame and the ECTS frame is determined in addition to the transmission power[D]. In the first exemplary embodiment that is already described, when the step moves from step B5 to step B6, the probe request frame is transmitted by the preset transmission power [C] to adjust the transmission power [C]. It is also possible to transmit the probe request frame by the transmission power that is equal to the predetermined transmission power [D] to adjust the transmission power to be larger, and determine the transmission power [C] so that the probe response frame can be received from "the number of nodes of equal to or more than the number of nodes (number of adjacent nodes) in which direct communication is possible by the transmission power [D]" when the step B5 moves to step B6. For example, if the node can perform direct data communication with two nodes by the transmission power [D] determined by the node, this node determines the transmission power that can perform control communication (communication of the ERTS frame and the ECTS frame) with two or more nodes as the transmission power [C] by the method above.

Alternatively, the following first to third methods may be possible as a method of determining the transmission power [C].

In the first determination method, the maximum transmission power that can be specified by the power control unit 11 (maximum transmission power of the node) is set to the transmission power [C], which is stored in the internal register (not shown) of the radio transmission/reception device 1 in advance. The determination of the transmission power [C] by scanning is not performed. In steps C4 and E3 in the first exemplary embodiment, the transmission power (or the maximum transmission power of the node) stored in the internal register (not shown) in advance is specified, to transmit the ERTS frame and the ECTS frame. In this first determination method, even when the transmission power [D] determined in step B4 is the maximum transmission power that can be set in the node, the ERTS frame and the ECTS frame can be directly transmitted to the node whose number is the same as the number of adjacent nodes that can be searched by the transmission power [D].

In the second determination method, when the number of adjacent nodes in which communication is available by the transmission power [D] for data communication is N, the number of nodes of "2·N" is set to the target value of the number of nodes in the determination in step B7. Thus, the process of steps B6 to B8 shown in the first exemplary embodiment is repeated until when the number of nodes that have responded becomes twice the number of adjacent nodes N as a result of scanning in step B6. When the number of nodes that have responded in scanning becomes 2·N (YES in step B7), the transmission power specified in the previous step B6 is determined as the transmission power [C]. In this second determination method, the node does not have to transmit the ERTS frame and the ECTS frame by the maximum transmission power, whereby the power consumption of the node can be reduced, and the battery drive time can be made longer when the node is, for example, a mobile wireless terminal such as PDA, or laptop personal computer.

The third determination method is the one in which the second determination method is extended. Each node stores the adjacent node address in which direct communication is available by the transmission power [D] determined in step B4 in the adjacent node address storage unit 25. In the third determination method, the node obtains the adjacent node address stored in the adjacent node address storage unit 25 of the adjacent node from the node (or adjacent node)that can perform direct communication by the transmission power [D]. In summary, the node address of the node that is adjacent to the adjacent node of its own node is obtained. After performing step B6 in the first exemplary embodiment, the power control unit 11 determines whether the probe response frames can be received from all the nodes including the obtained node address (node that is adjacent to the adjacent node of its own node, but except the own node). When the probe response frames are not received from all the nodes having the obtained node address, the transmission power [C] is adjusted as is similar to step B8. When the probe response frame can be received from all the nodes having the obtained node address, the transmission power that is used in scanning is determined as the transmission power [C].

In order to make it possible for the node to obtain the adjacent node address stored in the adjacent node address storage unit 25 of the adj acent node from the adj acent node, the operation below is performed, for example. For example, the control information input/output unit 24 of each node makes the frame assembling unit 14 generate the frame (address notification signal) in which the node address of the adjacent node stored in the adjacent node address storage unit 25 is described after step B5. Then, the demodulation unit 12 demodulates the frame to transmit the demodulated frame. At this time, the power control unit 11 specifies the transmission power [D], and the demodulation unit 12 transmits the frame by the transmission power [D]. Each node may obtain the adjacent node address stored in the adjacent node address storage unit 25 of the adjacent node by receiving the frame from the adjacent node. However, the address notification signal may be transmitted by the transmission power [C]. When the transmission power [C] is used, the node that is not the adjacent node of the "transmission source node of the address notification signal," may receive the address notification signal. However, as the node does not store the address of the transmission source node of the address notification signal in the adjacent node address storage unit 25, the received address notification signal is discarded.

Note that each determination method of the transmission power [C] described here is applied to the first exemplary embodiment determining the transmission power [C].

Further, in the first and second exemplary embodiments, each node of the present invention may transmit the RTS frame and the CTS frame to the node complied only with the RTS/CTS control. The ERTS frame and the ECTS frame used in the present invention include the adjacent node number field showing the number of adjacent nodes and the adjacent node address field showing the address of the adj acent node in addition to the frame control field including the RTS frame and the CTS frame, the duration field, the destination node address field, the transmission source node address field, and the FCS field.

Further, the ERTS frame and the ECTS frame received by the node is disassembled into a bit string for each field in the frame disassembling unit 15, and the disassembled bit string is transferred to the control information input/output unit 24 by the analysis unit 21. Further, the control information input/output unit 24 transfers the adjacent node address stored in the adjacent node address storage unit 25 and the number of adjacent nodes to the frame assembling unit 14, and the frame assembling unit 14 assembles the ERTS frame and the ECTS frame.

Further, the RTS frame and the CTS frame used in the RTS/CTS control according to the related art have the fixed lengths.

From the above description, each node of the present invention is able to transmit the RTS frame and the CTS frame to the node that only corresponds to the RTS/CTS control by the operation shown below.

Even when the frame obtained after demodulation is the ERTS frame or the ECTS frame of the present invention, or the RTS frame or the CTS frame of the related art, the demodulation unit 13 outputs the frame to the frame disassembling unit 15. The frame disassembling unit 15 determines whether the received frame is the ERTS frame or ECTS frame, or RTS frame or CTS frame based on the frame control field 91.

When it is determined that the received frame is the related RTS frame or CTS frame, the frame disassembling unit 15 disassembles the RTS frame or the CTS frame into a bit string for each field. When outputting each bit string to the analysis unit 21, the frame disassembling unit 15 notifies the analysis unit 21 that the transmission source node of the received frame (RTS frame or CTS frame) only corresponds to the RTS/CTS control.

Upon receiving this notification, the analysis unit 21 outputs each bit string to the control information input/output unit 24, and notifies the control information input/output unit 24 that the transmission source node of the received frame only corresponds to the RTS/CTS control.

Upon receiving this notification, the control information input/output unit 24 stores the fact that the transmission source node of the received frame only corresponds to the RTS/CTS control in the adjacent node address storage unit 25. More specifically, when the node address of the adj acent node is stored in the adj acent node address storage unit 25 in step B5, a flag that indicates whether the node is the one that only corresponds to the RTS/CTS control is stored in accordance with the node address of the adjacent node. The initial state of this flag may be set to "0" indicating invalid (transmission and reception of the ERTS frame and the ECTS frame are possible). Upon receiving notification that the transmission source node of the received frame only corresponds to the RTS/CTS control, the control information input/output unit 24 validates the flag of the node address that matches the transmission source address described in the transmission source address field of the received RTS frame among the node address of each adjacent node stored in the adjacent node address storage unit 25. In short, the state of the flag is "1" indicating valid (the node shown by the node address only corresponds to the RTS/CTS control). As the transmission source address is not described in the CTS frame, the flag stored in the adjacent node address storage unit 25 is rewritten when receiving the RTS frame.

Further, when the control information input/output unit 24 makes the frame assembling unit 14 generate the ERTS frame or the ECTS frame in step C3 or step E3 (step F3 in the second exemplary embodiment), it checks whether the flag of the node address that should be the destination node address of the ERTS frame or the ECTS frame is valid by referring to the adjacent node address storage unit 25. The control information input/output unit 24 indicates the frame assembling unit 14 to generate the related RTS frame instead of ERTS frame when the flag of the node address that should be the destination node address of the ERTS frame is valid. Similarly, when the flag of the node address that should be the destination node address of the ECTS frame is valid, the control information input/output unit 24 indicates the frame assembling unit 14 to generate the conventional CTS frame instead of the ECTS frame. Further, when the flag of the node address that should be the destination node address of the ERTS frame or the ECTS frame is invalid, the control information input/output unit 24 makes the frame assembling unit 14 generate the ERTS frame or the ECTS frame.

When the indication is provided to generate the RTS frame, the frame assembling unit 14 generates the RTS frame by describing the control information input from the control information input/output unit 24 in the predetermined field of the RTS frame (see Fig. 16A). Similarly, when the indication is provided to generate the CTS frame, the frame assembling unit 14 generates the CTS frame by describing the control information input from the control information input/output unit 24 in the predetermined field of the CTS frame (see Fig. 16B). The operation of modulating the RTS frame and the CTS frame assembled by the frame assembling unit 14 by the modulation unit 12 and transmitting the modulated frames is similar to when the ERTS frame and the ECTS frame are transmitted.

As described above, the RTS frame/CTS frame is transmitted instead of the ERTS frame/ECTS frame for the node that only corresponds to the RTS/CTS control, whereby the node (radio communication device) of the present invention can be applied with the radio communication system such as the existing wireless LAN using the RTS/CTS control.

Further, in the first and second exemplary embodiments, the transmission source node address field is included in the ECTS frame. As is similar to the conventional CTS frame, the transmission source node address field may not be included in the ECTS frame. However, in this case, the determination of step E8a in receiving the ECTS frame cannot be accurately performed. Thus, it is preferable to include the transmission source node address field in the ECTS frame.

Further, the scanning method includes an active scanning method and a passive scanning method. In the active scanning method, a desired node transmits the probe request frames at certain intervals. In the active scanning method, the nodes exchange the probe request frames and the probe response frames, so as to search the node installed in the radio communication system. The node that executes the scanning broadcasts the probe request frame. After probe request, the node activates the timer to monitor the reception of the probe response frame. In the first and second exemplary embodiments, explanation has been made of a case in which the active scanning method is employed.

In the passive scanning method, the node transmits the probe response frame in accordance with the probe request frame (in some cases, beacon) transmitted by the specific node (access point in the wireless LAN). When the passive scanning method is employed, the power consumption due to the frequent frame transmission by the node can be reduced. The passive scanning method is preferably employed when the power consumption due to the frequent frame transmission by the node is reduced. The nodes other than the specific node may determine the adjacent node of another node from the probe request frame and the probe response frame transmitted or received by the specific node and another node.

The active scanning method is preferably employed in the communication network that is formed of a mobile device that cannot supply power to the node, or in the communication network in which the period that cannot establish the radio communication link is made longer upon waiting for the beacon from the specific node due to the movement of the node.

In the variant examples of the first exemplary embodiment and the second exemplary embodiment, the scanning information input/output unit 22, the data input/output unit 23, the control information input/output unit 24, and the analysis unit 21 may be realized by CPU that operates according to the radio communication program. Further, the scanning information input/output unit 22, the data input/output unit 23, the control information input/output unit 24, and the analysis unit 21 may be realized by the same CPU. The CPU reads the radio communication program from the storage device included in the node control device 23, and operates as the scanning information input/output unit 22, the data input/output unit 23, the control information input/output unit 24, and the analysis unit 21 according to the radio communication program.

### First exemplary example

Next, the first exemplary example of the present invention will be described with reference to the drawings. The first exemplary example corresponds to the first exemplary embodiment of the present invention.

The first exemplary example will be described by taking the radio communication system shown in Figs. 5A and 5B as an example. The radio communication system shown in Figs. 5A and 5B is ad-hoc network having no device that collectively manages the communication control of the nodes such as the access point. The description will be made on a case in which the transmitting node (4) transmits data to the receiving node (3).

Further, in the first exemplary example, the number of adjacent nodes that can be specified in the ERTS frame and the ECTS frame is k=2 at a maximum, and the ERTS frame and the ECTS frame have fixed lengths.

Further, in the first exemplary example, a case of employing the active scanning method will be described. The node searches the adjacent node in which data communication is available, and determines the transmission power [D] for the data communication and the transmission power [C] for the control communication.

When the transmitting node (4) is powered on, it determines whether the scanning is executed (steps A1 and A2). This determination can be made using the timer included in the transmitting node (4) if the transmitting node (4) periodically executes the scanning. Further, when the transmitting node (4) receives the probe request frame from another node and the address of another node is not included in the adjacent node address storage unit 25 of its own node, or when the scanning is executed when the new node is added to the radio communication system, it can be determined whether the scanning is executed by receiving the probe request frame from another node by the transmitting node (4).

The operation of determining the transmission power [D] after it is determined that the transmitting node (4) executes the scanning (YES in step A2) will be described. The transmission node (4) is able to adjust the transmission power using the power control unit 11. Note that the function of adjusting the transmission power is generally provided in the wireless device used in the existing radio communication system. First, the transmitting node (4) broadcasts the probe request frame by the transmission power stored in the internal register in the radio transmission/reception device 1 in advance, and waits for the reception of the probe response frame only in the monitoring time. When the received probe response frame is three frames (the probe response frames transmitted from three different nodes are received) or more, the transmitting node (4) decreases the transmission power. When the received frame is less than two frames, the transmitting node (4) increases the transmission power to broadcast the probe request frame again. In the first exemplary example, the maximum number of adjacent nodes that can be specified in the adjacent node number field of the ERTS frame and the ECTS frame is two, and therefore, the target value is set to 2.

In the radio communication system shown in Figs. 5A and 5B, the transmitting node (4) determines the transmission power when the probe response frame is received from the nodes (3) and (5) as the transmission power [D]. Then, the transmitting node (4) stores the MAC addresses of the nodes (3) and (5) in the adjacent node address storage unit 25.

As already explained, the transmission power [D] may be determined by other methods.

Next, the operation will be described in which the transmitting node (4) executes the scanning to determine the transmission power [C] used for the control communication. In this example, the transmission power [C] is determined by the second determination method above. The number of adjacent nodes in which the transmitting node (4) can perform communication by the transmission power [D] is two (nodes (3) and (5)). Accordingly, the adjustment of the transmission power [C] or the scanning are performed setting the target value of the responding node to "4 (=2·2)" (steps B7 and B8). As a result, the transmitting node (4) determines the transmission power when the probe response frame is received from the nodes (3), (5), (2), and (6) as the transmission power [C]. However, the transmitting node (4) does not need to store the MAC addresses of the nodes (3), (5), (2), and (6) that have succeeded in the search.

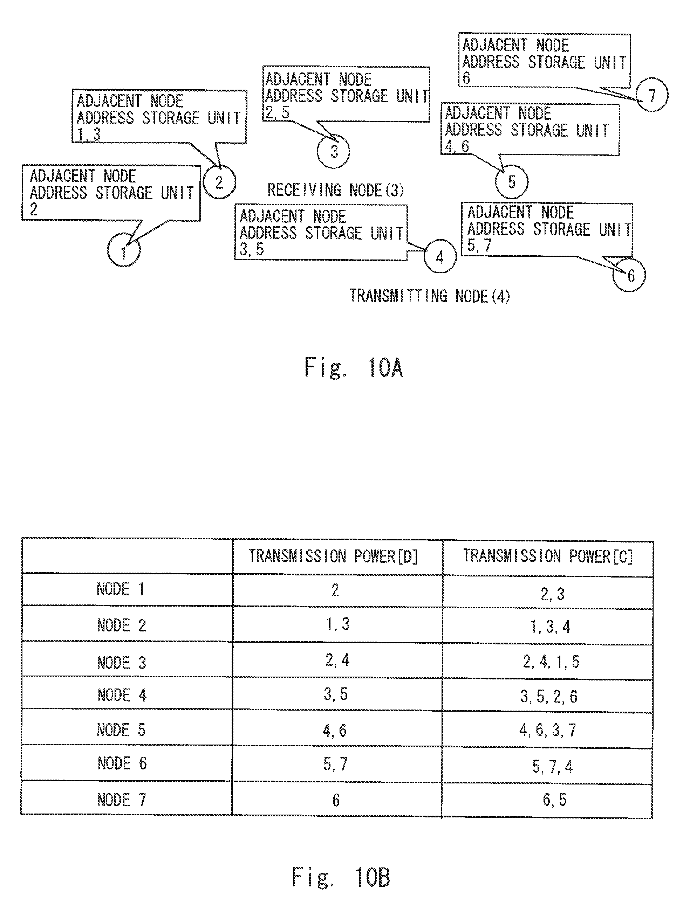

The nodes (1) to (7) installed in the radio communication system including the transmitting node (4) execute the above scanning, and store the MAC address of the adjacent node in the adjacent node address storage unit of its own to determine the transmission power [D] and the transmission power [C]. Figs. 10A and 10B are explanation diagrams showing the node address stored in the adjacent node address storage unit of its node by each node (1) to (7) in this example. The table shown in Fig. 10B is the table similar to that shown in Fig. 5B.

Referring back to step A2, the transmitting node (4) executes the broadcast transmission of the ERTS frame prior to the data transmission to the receiving node (3). The control information input/output unit 24 of the transmitting node (4) refers to the adjacent node address storage unit 25 of its own to make the frame assembling unit 14 generate the ERTS frame. In the adjacent node number field of the ERTS frame, the number of adjacent nodes "2" is described. In the adjacent node address field, the MAC address of the adjacent nodes (3) and (5) is described. In the destination node address field, the MAC address of the receiving node (3) is described, and in the transmission source node address field, the MAC address of the transmitting node (4) is described.

The transmitting node (4) broadcasts the generated ERTS frame by the transmission power [C] used in the control communication. The ERTS frame which is broadcasted is received by the nodes (3), (5), (2), and (6) in which direct communication is available by the transmitting node (4) by the transmission power [C].

Each node (3), (5), (2), and (6) receiving the ERTS frame operates as follows.

The nodes (3), (5), (2), and (6) refer to the destination node address field of the received ERTS frame.

The node (3) in which the destination node address matches the MAC address of its own generates the ECTS frame according to the received ERTS frame and prepares for broadcast transmission.

The nodes (5), (2), and (6) refer to the destination node address field and the transmission source node address field of the received ERTS frame.

The node (2) stores the node address of the receiving node (3) in the adjacent node address storage unit 25. Further, the node (5) stores the node address of the transmitting node (4) in the adjacent node address storage unit 25. Further, in the ERTS frame, the node address of the receiving node (3) is described as the destination node address and the node address of the transmitting node (4) is described as the transmission source node address.

The nodes (2) and (5) in which the destination node address or the transmission source node address is included in the node address stored in the adjacent node address storage unit 25 of its own set the NAV period for the time width included in the duration field of the received ERTS frame (step E5).

The node (6) refers to the adjacent node address field of the received ERTS frame.

In the adjacent node address field of the ERTS frame, the addresses of the nodes (3) and (5) are described. Further, the node (6) stores the nodes (5) and (7) in the adjacent node address storage unit 25 of its own. Accordingly, the address of the node (5) which is the adjacent node address described in the ERTS frame is included in the adjacent node address stored in the adjacent node address storage unit 25 of the node (6). Accordingly, the node (6) in which the adjacent node address stored in the adjacent node address storage unit 25 of its own is included in the adjacent node address included in the received ERTS frame recognizes that the node (5) including the adjacent node address sets the NAV period. The node (6) stores the MAC address of the node (5) in the NAV setting node address storage unit 26 given by the memory that enables high-speed reading and writing, for example (step E7). After that, even when there is a request of the data communication from the data processing device 3 to the node (5), the node (6) does not execute the control communication (transmission of the ERTS frame), but delays the data communication by the time width included in the duration field of the received ERTS frame. After the NAV period of the node (5) has been terminated, the node (6) deletes the MAC address of the node (5) stored in the NAV setting node address storage unit 26.

Next, explanation will be made on a case in which the ERTS frame transmitted by the transmitting node (4) by the transmission power [C] reaches the node (1) other than the nodes (3), (5), (2), (6). In general, in the radio communication system, the radio propagation characteristics may be fluctuated, and unexpected node (1) may receive the ERTS frame. As the node (1) does not satisfy any condition of steps E2, E4, E6, it discards the ERTS frame received from the transmitting node (4).

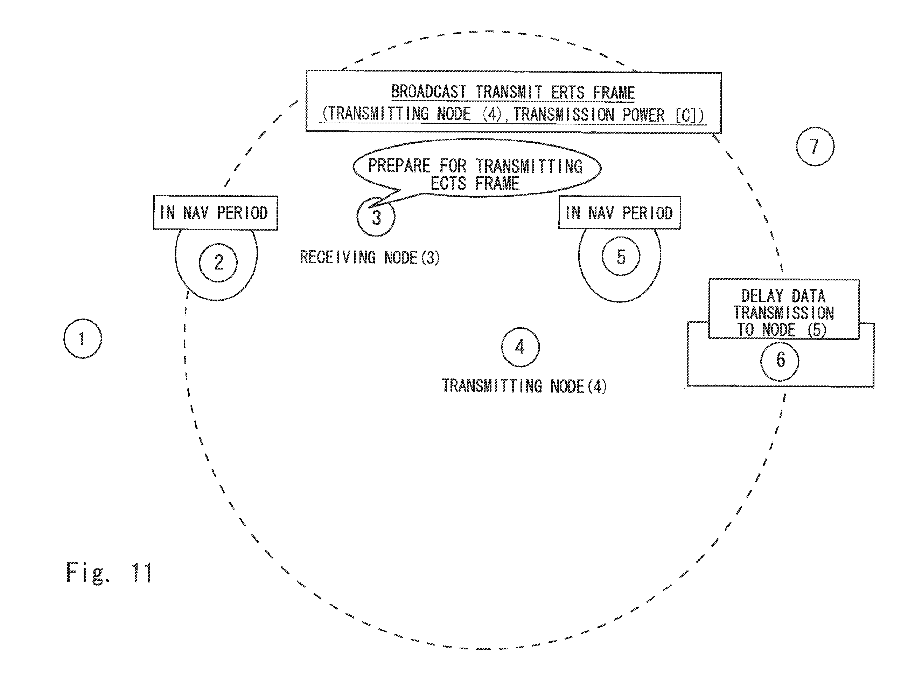

Fig. 11 is the state of nodes (1) to (7) after the transmitting node (4) broadcasts the ERTS frame by the transmission power [C]. The node (3) prepares for transmission of the ECTS frame, and the nodes (2) and (5) are in the NAV period. The node (6) recognizes that the adjacent node (5) in which direct communication is possible by the transmission power [D] is in the NAV period. Even when there is a data transmission request to the node (5), the node (6) delays the data transmission in the NAV period of the node (5). Further, the nodes (1) and (7) are in the idle state (waiting for data transmission and reception) irrespective of whether the ERTS frame is received or not.
Next, when receiving the ERTS frame from the transmitting node (4) and completing preparing for transmission of the ECTS frame, the receiving node (3) broadcasts the ECTS frame by the transmission power [C] used for control communication. As is similar to the ERTS frame, the receiving node (3) generates the ECTS frame using the adjacent node address stored in the adjacent node address storage unit 25 of its own. The ECTS frame that is broadcasted is received by the nodes (2), (4), (1), and (5) in which direct communication is available by the receiving node (3) by the transmission power [C].

Each node (2), (4), (1), and (5) receiving the ECTS frame operates as follows.

The nodes (2), (4), (1), and (5) refer to the destination node address field of the received ECTS frame.

The node (4) in which the destination node address matches the MAC address of its own generates the data frame and prepares for data transmission to the receiving node (3).

The nodes (2), (1), and (5) refer to the adjacent node address field of the received ECTS frame.

The node (1) stores the node address of the node (2) in the adjacent node address storage unit 25. Further, the destination node address of the received ECTS frame is the node address of the node (4), and the transmission source node address is the node address of the node (3). Accordingly, the node (1) moves from steps E8, E8a, and E9 in this order (see Fig. 4). Further, the node addresses of the nodes (2) and (4) are described in the adjacent node address field of the received ECTS frame. Accordingly, the address of the node (2) is stored in the adjacent node address storage unit 25 of the node (1), and also described in the ECTS frame. The node (1) including the adjacent node address stored in its own adjacent node address storage unit 25 in the adjacent node address included in the received ECTS frame recognizes that the node (2) including the adjacent node address sets the NAV period. The node (1) stores the MAC address of the node (2) in the NAV setting node address storage unit 26 that is given by the memory that enables to perform high-speed reading and writing, for example (step E10). Then, the node (1) does not execute the control communication (transmission of the ERTS frame) even when the request of the data communication is produced from the data processing device 3 to the node (2), and delays the data communication by the time width included in the duration field of the received ECTS frame. After termination of the NAV period of the node (2), the node (1) deletes the MAC address of the node (2) stored in the NAV setting node address storage unit 26.

The nodes (2) and (5) that are in the NAV period do not move to step E9, but discard the ECTS frame received from the receiving node (3).

Further, there may be a case in which the nodes (6) and (7) that do not receive the ECTS frame from the receiving node (3) receive the ECTS frame from the receiving node (3) due to the fluctuation of the radio propagation characteristics. The nodes (6) and (7) do not store the node address described in the adjacent node address field of the ECTS frame in the adjacent node address storage unit 25 of its own node. Accordingly, the nodes (6) and (7) discard the ECTS frame received from the receiving node (3) without moving from step E9 to step E10.

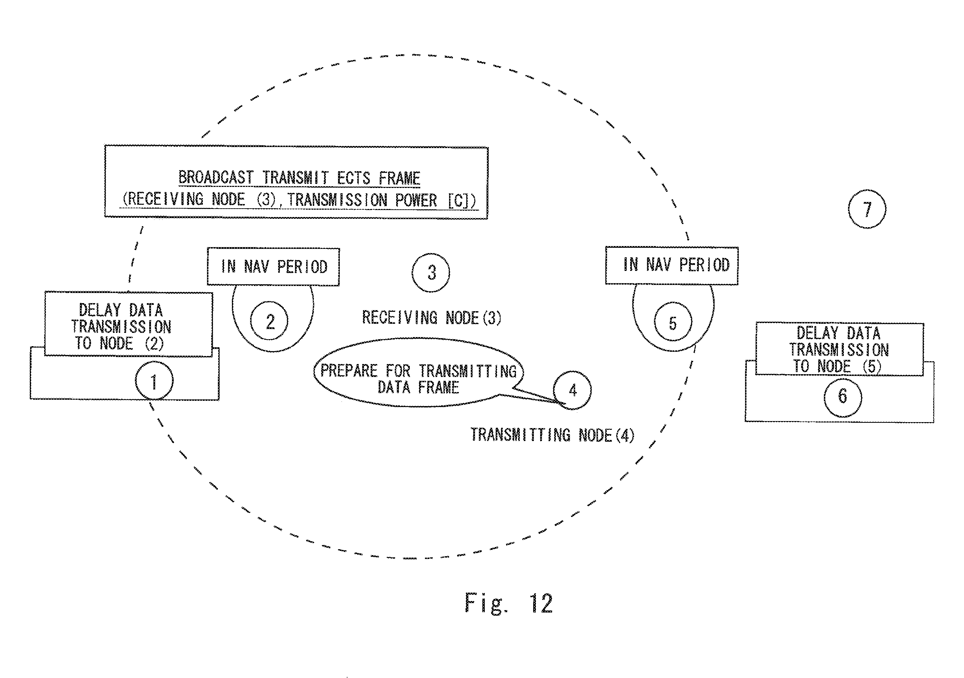

Fig. 12 shows a state of the nodes (1) to (7) after the receiving node (3) broadcasts the ECTS frame by the transmission power [C]. The node (4) prepares for transmission of the data frame, and the nodes (2) and (5) are in the NAV period. The node (6) delays the data transmission to the node (5). Then, the node (1) recognizes that the adjacent node (2) that can perform direct communication by the transmission power [D] is in the NAV period, and the data transmission is delayed in the NAV period of the node (2) even when the request of data transmission to the node (2) is produced. Further, the node (7) is in the idle state (showing a state of waiting for transmission and reception of data) irrespective of whether or not the node (7) has received the ERTS frame.

Next, the transmission node (4) that completes the exchange of the ERTS frame and the ECTS frame executes the data transmission to the receiving node (3) by the transmission power [D] used for the data communication.

From the operation above, as the node (6) recognizes that the node (5) is in the NAV period even when there is produced the data transmission request to the node (5), for example, the node (6) delays the transmission of the ERTS frame to the node (5). Accordingly, the degradation of the power consumption efficiency of the node (6) can be prevented (prevent NAV blocking). Further, as the node (6) delays the transmission of the ERTS frame, the node (7) does not have to redundantly set the NAV period. Thus, the node (7) is able to execute the data transmission to the node (6), whereby the lowering of the communication rate can be prevented (prevent NAV redundancy setting), for example.

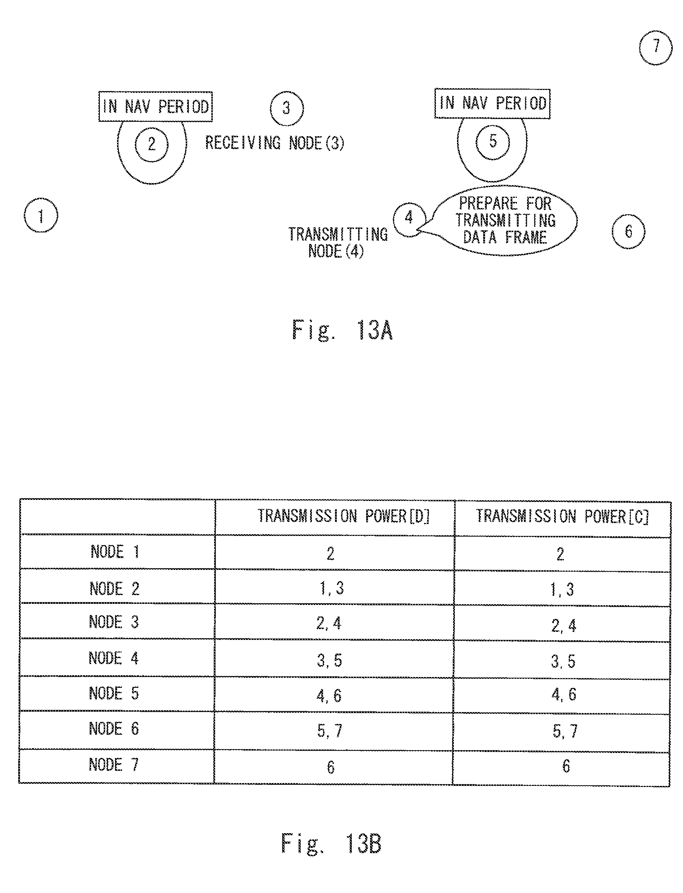

If the node (adjacent node) in which direct communication is available by the transmission power [D] and the node in which direct communication is available by the transmission power [C] in performing scanning are identical with each other, the state in which the exchange of the ERTS frame and the ECTS frame is terminated is identical to the state in which the exchange of the RTS frame and the ECTS frame is terminated in the existing RTS/CTS control. Figs. 13A and 13B are explanation diagrams showing the example of the radio communication system in which the nodes in which direct communication is available by the transmission power [D] and the nodes in which direct communication is available by the transmission power [C] are identical with each other. As is similar to Figs. 5A and 5B, the node address of each node is shown as (1) to (7). The table shown in Fig. 13B shows the node addresses of the nodes in which communication is available by each node by the transmission power [D] and the node addresses of the nodes in which communication is available by each node by the transmission power [C]. The frame can be transmitted to the node having a difference of "1" with the node address of its own node regardless of whether the frame is transmitted by the transmission power [D] or the transmission power [C]. As shown in Figs. 13A and 13B, even when the node that can be searched when the nodes (1) to (7) installed in the radio communication system use the transmission power [D] and the node that can be searched when the nodes (1) to (7) use the transmission power [C] are identical with each other, the nodes (2) and (5) are in the NAV period, and the receiving node (3) executes the data communication to the transmitting node (4) upon completion of the exchange of the ERTS frame and the ECTS frame. The state shown in Fig. 13A is the same as the state of the radio communication system in which the exchange of the RTS frame and the CTS frame is terminated in the RTS/CTS control. Accordingly, there is no case in which the communication rate and the efficiency of power consumption of the node that operates in the radio communication system executing the ERTS/ECTS control is lower in performance than the communication rate and the efficiency of power consumption of the node that operates in the radio communication system executing the RTS/CTS control.

Further, in the radio communication system shown in Figs. 13A and 13B, even when the node (4) executes the multi-hop communication by relaying the node (3), for example, and executing the data transmission to the node (2), the degradation of the communication rate and the power consumption efficiency of the node can be prevented by executing the ERTS/ECTS control between the node (4) and the node (3), and between the node (3) and the node (2).

### Second exemplary example

Next, the second exemplary example of the present invention will be described with reference to the drawings. The second exemplary example corresponds to the second exemplary embodiment of the present invention.

The second exemplary example will be described taking a radio communication system shown in Figs. 9A and 9B as an example. The radio communication system shown in Figs. 9A and 9B is formed of seven nodes in total, and is ad-hoc network having no device that collectively manages the communication control of the node such as the access point. A case in which the transmitting node (4) performs the data transmission to the receiving node (3) will be described.

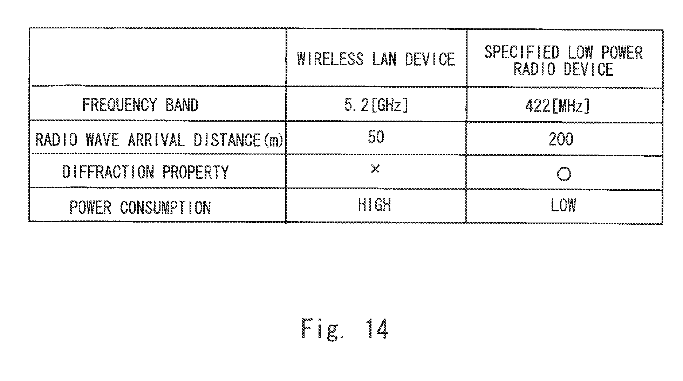

The nodes installed in the radio communication system shown in Figs. 9A and 9B include a first radio transmission/reception device 4 and a second radio transmission/reception device 5. The second radio transmission/reception device 5 has radio propagation characteristics of different frequency band, higher diffraction property, and smaller power consumption than the first radio transmission/reception device 4, and the radio wave arrival distance of the second radio transmission/reception device 5 is longer than the radio wave arrival distance of the first radio transmission/reception device 4. The wireless LAN device complied with the IEEE802.11a standard can be employed, for example, as the first radio transmission/reception device 4. Further, the specified low power radio device (1mW type) which does not require the license can be employed, for example, as the second radio transmission/reception device 5. Fig. 14 shows the difference of the radio propagation characteristics between the wireless LAN device and the specified low power radio device.

The seven nodes installed in the radio communication system shown in Figs. 9A and 9B determine whether the scanning is executed after they are powered on (steps A1 and A2).

The operation of determining the transmission power [D] upon determination that the transmitting node (4) executes the scanning (YES in step A2) will be described. The transmitting node (4) executes the scanning using the first radio transmission/reception device 4. The transmitting node (4) determines the transmission power [D] in steps B1 to B5 and stores the MAC addresses of the nodes (3) and (5) in the adjacent node address storage unit 25, as is similar to the first exemplary example.

However, the transmitting node (4) does not perform the scanning using the second radio transmission/reception device 5. The second radio transmission/reception device 5 may use the transmission power stored in the internal register or use the maximum transmission power. This is because, as the power consumption of the second radio transmission/reception device 5 is sufficiently small compared with the first radio transmission/reception device 4, there is no significant degradation in the power consumption of the node even when the transmission power of the second radio transmission/reception device 5 is not adjusted, whereby the communication processing load due to the execution of the scanning of the first radio transmission/reception device 4 and the scanning of the second radio transmission/reception device 5 causes a problem.

However, when the scanning is periodically executed and the executing intervals of the scanning are sufficiently long, for example, the scanning using the second radio transmission/reception device 5 in addition to the the first radio transmission/reception device 4 may be executed to determine the transmission power.

Referring back to step A2, the transmitting node (4) broadcasts the ERTS frame using the second radio transmission/reception device 5 prior to the data transmission to the receiving node (3). The ERTS frame that is broadcasted is received by the nodes (1), (2), (3), (5), (6), and (7) in which direct communication is available by the transmitting node (4) in the second radio transmission/reception device 5.

The nodes (1), (2), (3), (5), (6), and (7) receiving the ERTS frame operate as follows.

The receiving node (3) satisfying the condition of step E2 of the nodes (1), (2), (3), (5), (6), and (7) generates the ECTS frame to prepare for broadcast transmission.

Next, the nodes (2) and (5) satisfying the condition of step E4 of the nodes (1), (2), (5), (6), and (7) set the NAV period (step E5).

The node (6) satisfying the condition of step E6 of the nodes (1), (6), and (7) recognizes that the node (5) sets the NAV period, and does not execute the communication even when there is a transmission request to the node (5).

Next the nodes (1) and (7) that do not satisfy any condition of steps E2, E4, and E6 discard the ERTS frame received from the transmitting node (4), and the state is in the idle state.

Next, the receiving node (3) that receives the ERTS frame from the transmitting node (4) and completes the preparing for transmission of the ECTS frame broadcasts the ECTS frame using the second radio transmission/reception device 5. The ECTS frame that is broadcasted is received by the nodes (1), (2), (4), (5), (6), and (7) in which direct communication is available by the receiving node (3) in the second radio transmission/reception device 5.

The nodes (1), (2), (4), (5), (6), and (7) receiving the ECTS frame perform as follows.

The transmitting node (4) satisfying the condition of step E8 of the nodes (1), (2), (4), (5), (6), and (7) generates the data frame to prepare for the data transmission to the receiving node (3).

Next, the node (1) satisfying the condition of step E9 of the nodes (1), (2), (5), (6), and (7) recognizes that the node (2) sets the NAV period, and does not execute the communication even when the transmission request is produced to the node (2).

The nodes (2) and (5) in the NAV period do not move from step E8a to step E9, but discard the ECTS frame received from the receiving node (3), and the state is in the idle state.

The nodes (6) and (7) receiving the ECTS frame do not satisfy any condition of steps E8 to E9, and discard the ECTS frame received from the receiving node (3), and the state is in the idle state.

Next, the transmitting node (4) that completes the exchange of the ERTS frame and the ECTS frame executes the data transmission to the receiving node (3) by the transmission power [D] used for the data communication using the first radio transmission/reception device 4.

In the second exemplary example, a case in which the wireless LAN device is used as the first radio transmission/reception device 4 and the specified low power radio device is used as the second radio transmission/reception device 5 is described, as an example. However, other radio transmission/reception devices may be used as the first radio transmission/reception device 4 and the second radio transmission/reception device 5. The first radio transmission/reception device 4 and the second radio transmission/reception device 5 are different in any one of the radio propagation characteristics of at least the frequency band, the power consumption, and the diffraction property. As such, the exemplary advantage of the present invention can be obtained when the radio wave arrival distance of the second radio transmission/reception device 5 is longer than that of the first radio transmission/reception device 4.

### Industrial Applicability

The present invention can be preferably applied to the mobile wireless terminal such as the laptop personal computer and the PDA that operate in the ad-hoc network where there is no device that collectively manages the communication control of the node such as the access point. Further, the present invention can be preferably applied to the radio sensor node that forms the sensor network system in which the node mounting the sensor device performs radio transmission of the measurement information of the sensor. Further, the present invention is preferably applied to the access point, and the mobile terminal such as the laptop personal computer and PDA that operate in the wireless LAN network that is formed by a plurality of radio cells managed by the access point.

## Claims

1. A radio communication device that transmits or receives signals by radio wave, the device comprising:
a transmitting means for transmitting a data signal including data and a predetermined control signal, wherein
a radio wave arrival distance in transmitting the data signal is different from a radio wave arrival distance in transmitting the control signal.

2. A radio communication device that transmits or receives signals by radio wave, the device comprising:
a transmitting means for transmitting a data signal including data and a predetermined control signal;
a probe signal generating means for generating a probe request signal that requests response from another radio communication device and a probe response signal that is the response to the probe request signal;
a scanning control means indicating generation of the probe response signal to the probe signal generating means upon receiving the probe request signal; and
an adjusting means adjusting the radio wave arrival distance in transmitting the data signal and the radio wave arrival distance in transmitting the control signal so that the probe request signal received from another radio communication device satisfies a predetermined condition.

3. The radio communication device according to claim 1, wherein the radio wave arrival distance in transmitting the control signal is larger than the radio wave arrival distance in transmitting the data signal.

4. The radio communication device according to claim 1, wherein the transmitting means for transmitting the data signal having shorter radio wave arrival distance and the control signal having lounger radio wave arrival with using two kinds of radio waves having different radio wave arrival distances due to a fact that at least one of frequency band, power consumption, and diffraction property is different.

5. The radio communication device according to claim 1 or 3, comprising:
a probe signal generating means that generates a probe request signal that requests response from another radio communication device and a probe response signal that is the response to the probe request signal;
a scanning control means for indicating generation of the probe request signal to the probe signal generating means when receiving the probe request signal; and
an adjusting means adjusting the radio wave arrival distance in transmitting the data signal and the radio wave arrival distance in transmitting the control signal so that the probe request signal received from another radio communication device satisfies a predetermined condition.

6. The radio communication device according to claim 2 or 5, wherein:
the probe signal generating means for generating the probe request signal and the probe response signal that include an address of the radio communication device itself including the probe signal generating means as a transmission source address;
the adjusting means for determining transmission power of the probe request signal when the number of probe response signals received from another radio communication device that responds to the probe request signal reaches a predetermined target value as transmission power in transmitting the data signal;
the radio communication device includes an adjacent device address storing means for storing a transmission source address of each probe response signal when the number of probe response signals received from another radio communication device that responds to the probe request signal reaches a predetermined target value;
the scanning control means for storing the transmission source address of each probe response signal when the number of probe response signals received from another radio communication device that responds to the probe request signal reaches a predetermined target value in the adjacent device address storing means; and
the adjusting means for determining the transmission power of the probe request signal as the transmission power in transmitting the control signal after transmission of the probe request signal so that radio communication device can receive the probe request signal from at least each of other radio communication devices whose address is stored in the adjacent device address storing means.

7. The radio communication device according to claim 4, comprising:
a probe signal generating means for generating a probe request signal that requests response from another radio communication device and a probe response signal that is the response to the probe request signal;
a scanning control means for indicating generation of the probe request signal to the probe signal generating means at receiving the probe request signal; and
an adjusting means for adjusting the radio wave arrival distance in transmitting the data signal so that the probe request signal received from another radio communication device satisfies a predetermined condition.

8. The radio communication device according to claim 7, wherein:
the probe signal generating means for generating the probe request signal and the probe response signal that include an address of the radio communication device itself including the probe signal generating means as a transmission source address;
the adjusting means for determining transmission power of the probe request signal when the number of probe response signals received from another radio communication device that responds to the probe request signal reaches a predetermined target value as transmission power in transmitting the data signal;
the radio communication device includes an adjacent device address storing means that stores a transmission source address of each probe response signal when the number of probe response signals received from another radio communication device that responds to the probe request signal reaches a predetermined target value; and
the scanning control means for storing the transmission source address of each probe response signal when the number of probe response signals received from another radio communication device that responds to the probe request signal reaches a predetermined target value in the adj acent device address storing means.

9. The radio communication device according to claim 6, comprising an address notification signal transmitting means for transmitting an address notification signal including an address stored in the adjacent device address storing means, wherein
the adjusting means determines the transmission power of the probe request signal as the transmission power in transmitting the control signal after transmission of the probe request signal so that radio communication device can receive the probe request signal from at least each of other radio communication devices whose address is stored in the adjacent device address storing means.

10. The radio communication device according to any one of claims 6, 8, and 9, wherein
the transmitting means transmits a first control frame with the transmission power in transmitting the control signal as a first control signal before transmitting the data signal, the first control frame including the address stored in the adjacent device address storing means, and
the transmitting means transmits a second control frame with the transmission power in transmitting the control signal at receiving the first control frame from another radio communication device, the second control frame including the address stored in the adjacent device address storing means.

11. The radio communication device according to claim 10, wherein
the transmitting means transmits frames as the first control frame and the second control frame, the frames including:
a frame control field in which at least a type of the frame is described;
a duration field in which duration is described;
a destination node address field in which an address of the radio communication device that is a destination of the first control frame is described;
a transmission source node address field in which an address of the radio communication device that is a transmission source of the first control frame is described;
an adjacent node number field in which the number of addresses stored in the adjacent device address storing means is described;
an adjacent node address field in which each address stored in the adjacent device address storing means is stored; and
an FCS (Frame Check Sequence) field in which an FCS value is described.

12. The radio communication device according to claim 11, wherein the transmitting means stops transmission of the frames when the address described in the destination node address field of the first control frame does not match the address of the radio communication device itself receiving the first control frame and the adjacent device address storing means stores the address described in the destination node address field of the first control frame or the address described in the transmission source node address field in receiving the first control frame.

13. The radio communication device according to claim 11 or 12, wherein the transmitting means transmits the second control frame in which the address described in the transmission source node address field of the first control frame is described in the destination node address field when the address described in the destination node address field of the first control frame matches the address of the radio communication device itself receiving the first control frame when receiving the first control frame.

14. The radio communication device according to claim 13, comprising a transmission stop device address storing means for storing an address of another radio communication device that stops transmission of frames and a period of stopping the transmission of the frames while being made correspondent to each other.

15. The radio communication device according to claim 14, comprising a transmission stop device address managing means storing a common address and a duration described in the duration field of the first control frame with making a connection between the common address and the duration in the transmission stop device address storing means when the address described in the destination node address field of the first control frame does not match the address of the radio communication device itself that receives the first control frame when receiving the first control frame, the adjacent device address storing means does not store the address described in the destination node address field of the first control frame and the address described in the transmission source node address field, and there is a common address of the address described in the adjacent node address field of the first control frame and the address stored in the adjacent device address storing means.

16. The radio communication device according to claim 15, wherein the transmission stop device address managing means stops transmission of the first control frame having an address corresponding to a stop period as destination when the transmission of the frame stored in the transmission stop device address storing means is stopped.

17. The radio communication device according to any one of claims 1 to 16, comprising:
a data processing means for outputting data that should be transmitted; and
a data input/output means for outputting the data output from the data processing means to the transmitting means.

18. A radio communication method, wherein a transmitting means transmits a data signal by radio wave in transmitting the data signal in transmitting the data signal including data, and transmits a control signal by radio wave in transmitting the control signal having a radio wave arrival distance larger than a radio wave arrival distance of radio wave in transmitting the data signal in transmitting a predetermined control signal.

19. A radio communication program mounted on a computer, the computer comprising an adjacent device address storing means for storing an address of a radio communication device capable of directly transmitting a data signal including data, a transmission stop device address storing means that stores an address of the radio communication device that stops transmission of a signal and a signal transmission stop period while being made correspondent to each other, and a transmitting means that transmits the data signal and a predetermined control signal, wherein
the radio communication program forces the computer to execute transmission stop device storing processing to store a common address and a stop period shown by a radio signal in the transmission stop device address storing means while being made correspondent to each other when the address of the computer does not match a transmission source address of the received control signal, the adjacent device address storing means does not store the transmission source address and a destination node address of the control signal, and there is a common address of the address stored in the adjacent device address storing means of the radio communication device transmitting the control signal included in the control signal and the address stored in the adjacent device address storing means when receiving a predetermined control signal.

20. A control frame data structure which is a data structure of a control frame transmitted prior to transmission of a data frame in which data is described, the control frame data structure comprising:
a frame control field in which at least a type of the frame is described;
a duration field in which duration is described;
a destination node address field in which an address of a radio communication device that is a destination of the control frame is described;
a transmission source node address field in which an address of the radio communication device which is a transmission source of the control frame is described;
an adjacent node number field in which the number of other radio communication devices in which direct transmission is available by the radio communication device which is the transmission source of the control frame;
an adjacent node address field in which an address of each of other radio communication devices in which direct transmission is available by the radio communication device that is the transmission source of the control frame is described; and
an FCS (frame Check Sequence) field in which an FCS value is described.
